# EUROPEAN PATENT APPLICATION

(11) **EP 1 780 640 A1**
(43) Date of publication of application: **02.05.2007**
(21) Application number: 04771733.5
(22) Date of filing: 17.08.2004
(51) Int. Cl.: G06F 12/14

(54) **STORAGE DEVICE AND STORAGE METHOD**

(71) Applicant: MITSUBISHI ELECTRIC CORPORATION, Chiyoda-ku Tokyo 100-8310 (JP)
(72) Inventor: ONO, Ryoji, Mitsubishi Electric Corporation, Chiyoda-ku, Tokyo 1008310 (JP); MUNAKA, Tatsuji, Mitsubishi Electric Corporation, Chiyoda-ku, Tokyo 1008310 (JP); SAWAMURA, Mariko, Mitsubishi Electric Corporation, Chiyoda-ku, Tokyo 1008310 (JP)
(74) Representative: Pfenning, Meinig & Partner GbR
(86) International application number: PCT/JP2004/011772
(87) International publication number: WO 2006/018864

(57) **Abstract**

It is aimed to prevent access to data when a storage device 1 is lost without damaging security and convenience of a user even if the storage device 1 is under condition in which communication with an authentication server is unavailable and further a personal identification number is leaked. The storage device 1 includes a data storing unit 11 which stores security target data and valid duration of use data showing a valid duration of use of the security target data and a validity checking unit 14 which implements a validity check process for checking if the security target data stored in the data storing unit 10 is valid based on the valid duration of use data stored in the data storing unit 10. Then, when the communication with the authentication server is unavailable, access to the data is controlled by implementing the validity check process.

## Description

### Technical Field

The present invention relates to a storage device and a storage method provided with security for data stored therein.

### Background Art

Conventionally, in order to maintain security of data stored, independent from user authentication using PIN (Personal Identsty Number), etc., authentication of a user or a terminal is carried out using an authentication method by communication with a reliable server such as PKI (Public Key Infrastructure), and access control to data on a terminal is also implemented based on the authentication result of the communication with the server.
Further, when the terminal is lost, such as CRL (Certsficate Revocatson List), a process for forcibly making the authentication of the communication with the server fail, namely, a process for invalidating the access to the data is carried out, so that the access to the data can be denied even if the user authentication using PIN, etc. is broken.
This can be implemented by combining techniques disclosed in the non-patent document 1, the non-patent document 2, and the non-patent document 3.
Further, such as the patent document 1, only when a system time is obtained from a base station, the valid duration is checked based on the obtained system time and the contents are used.
Non-patent Document 1: RSA Laboratories. PKCS #1: RSA Encryption Standard. Version 2.0, October 1998.
Non-patent Document 2: RSA Laboratories. PKCS #7: Cryptographic Message Syntax Standard. Version 1.5, November 1993.
Non-patent Document 3: R. Housley, W. Ford, W. Polk and D. Solo, "Internet X. 509 Public Key Infrastructure - Certificate and CRL Profile," RFC 2459, January 1999. Patent Document 1: JP2003-167788

### Disclosure of the Invention

### Problems to be Solved by the Invention

According to the non-patent documents 1, 2, and 3, in order to carry out access control to data on a terminal, the terminal always has to do authentication using PKI when the data is accessed. Namely, the communication with the server is always necessary at the time of accessing the data.
Further, according to the patent document 1, in order to access contents that are data on the terminal, the terminal always has to obtain the system time from the server such as the base station at the time of accessing the data.
This means, to put it the other way around, under condition in which the communication with the server is unavailable, that is, at off-line, it is impossible to carry out the authentication using PKI or the check of the valid duration using the system time.
Namely, at off-line, the authentication and the check always fail, and the access to the data on the terminal cannot be done, which damages the convenience of the user at off-line.

Under the above condition, in order to permit the access to the data at off-line, it has to permit the access to the data only by the user authentication using a PIN that is currently used in general such as done in case of mobile phone. However, the mobile phone is often under condition in which key input is easily peeped by a stranger. Further, currently, the PIN authentication of the mobile phone uses the same 4-digit PIN not only for the data protection but also for various functions including change of setting such as telephone call function, so that if the PIN is leaked, the various functions are sacrificed. When the mobile phone is stolen after the PIN is peeped by a stranger, the authentication using the PIN is easily broken.

The present invention is provided to solve the above problems and has objects not to damage the security and the convenience of the user and further to enable to prevent improper access to the data on the terminal when the terminal is lost even if the storage device is under condition in which the communication with the server is unavailable and at the same time the PIN is leaked.

### Means to Solve the Problems

A storage device according to the present invention includes: a data storing unit storing security target data and valid duration of use data showing a valid duration of use of the security target data; and a validity checking unit implementing validity check process for checking if the security target data stored in the data storing unit is valid.

The storage device is connected to a processing device carrying out a process using the security target data stored in the data storing unit and an authentication device authenticating use of the security target data stored in the data storing unit, the storage device further includes: a communicating unit communicating with the processing device and the authentication device; an authentication requesting unit implementing a request for authentication of use of the security target data stored in the data storing unit; and a controlling unit controlling the communicating unit, the authentication requesting unit, the validity checking unit, and the data storing unit, the communicating unit receives use requesting data for requesting use of the security target data stored in the data storing unit from the processing device and outputs the use requesting data to the controlling unit; the controlling unit outputs the use requesting data outputted from the communicating unit to the authentication requesting unit; the authentication requesting unit, in response to the use requesting data outputted from the controlling unit, outputs the authentication requesting data for requesting authentication of use of the security target data stored in the data storing unit to the communicating unit; the communicating unit, when it is possible to communicate with the authentication device, receives authentication result from the authentication device and outputs the authentication result received to the authentication requesting unit, and the authentication requesting unit outputs the authentication result outputted from the communicating unit to the controlling unit; the communicating unit, when it is impossible to communicate with the authentication device, outputs data showing that communication with the authentication device is unavailable to the authentication requesting unit, and the authentication requesting unit outputs the data outputted from the communicating unit to the controlling unit; the controlling unit, when an output from the authentication requesting unit is the authentication result of the authentication device, checks request result of the use requesting data based on the authentication result, and outputs request result data checked to the communicating unit, when an output from the authentication requesting unit is data showing that communication with the authentication device is unavailable, outputs the use requesting data to the validity checking unit, checks the request result for the use requesting data based on check result of the use requesting data outputted by the validity checking unit, and outputs the request result data checked to the communicating unit; and the communicating unit sends the request result data outputted by the controlling unit to the processing device.

The validity checking unit implements the validity check process of the security target data stored in the data storing unit at at least one of: timing of starting use of the security target data stored in the data storing unit; periodic timing with a regular interval when the security target data stored in the data storing unit is used; and periodic timing with a regular interval when the security target data stored in the data storing unit is unused.

The data storing unit stores: starting time data showing a starting time of use of the security target data; and checked time data showing a time when the validity check process of the security target data is implemented, and the validity checking unit implements the validity check process of the security target data stored in the data storing unit by comparing a time period from at least one of: a starting time of use of the security target data shown by the starting time data stored in the data storing unit; and a time when the validity check process of the security target data is implemented shown by the checked time data stored in the data storing unit until a time to start the validity check process and the time period shown by the valid duration of use data stored in the data storing unit.

The validity checking unit implements the validity check process of the security target data stored in the data storing unit by comparing a time to start the validity check process and a time shown by the valid duration of use data stored in the data storing unit.

The storage device operates by inputting/outputting of a periodic signal having a specific interval; the data storing unit stores a number of times of inputting/outputting the signal at least during one of a time period from a starting time of use of the security target data until a time to start the validity check and a time period from a time when the validity check process of the security target data is implemented until the time to start the validity check, and the validity checking unit implements the validity check process of the security target data stored in the data storing unit based on the number of times of inputting/outputting the signal stored in the data storing unit and the valid duration of use data stored in the data storing unit.

The storage device is connected to an outside device storing time data, the storage device further comprises a communicating unit communicating with the outside device and obtaining the time data stored by the outside device, the validity checking unit, before starting the validity check process, obtains the time data stored by the outside device via the communicating unit, compares the time data obtained and the time data stored in the data storing unit, when the time obtained shows a time which is forward to the time data stored in the data storing unit, implements the validity check of the security target data stored in the data storing unit based on the valid duration of use data stored in the data storing unit, and when the time obtained shows a time which is not forward to the time data stored in the data storing unit, judges that the security target data stored in the data storing unit invalid.

The validity checking unit deletes the security target data from the data storing unit when it is judged that the security target data stored in the data storing unit is invalid.

The storage device is connected to a processing device to which use requesting data is inputted by a user who requests use of the security target data stored in the data storing unit and which processes the use requesting data inputted, the storage device further comprises: a communicating unit communicating with the processing device; a user authenticating unit authenticating the user who requests use of the security target data stored in the data storing unit; and a controlling unit controlling the communicating unit, the user authenticating unit, the validity checking unit, and the data storing unit, the communicating unit receives the use requesting data from the processing device and outputs the use requesting data received, the controlling unit implements the user authenticating unit and the validity checking unit in response to the use requesting data outputted by the communicating unit, judges request result of the use requesting data based on authentication result of the user authenticating unit and check result of the validity checking unit, and outputs request result data to the communicating unit, and the communicating unit sends the request result data outputted by the controlling unit to the processing device.

The user authenticating unit implements the authentication of the user based on at least one of a personal identification number, a fingerprint, an eye print, a retina, an iris, a face shape, a voice, a tongue print, a handwriting, an IC (Integrated Circuit) card, a password, and a barcode.

The storage device is connected to a processing device for implementing a process related to the security target data stored in the data storing unit, and the validity checking unit implements the validity check process of the security target data stored in the data storing unit at at least one of: a timing when connected to the processing device; a timing when disconnected from the processing device; a timing when use of the security target data stored in the data storing unit is started; a periodic timing having a regular interval during the security target data stored in the data storing unit is being used; and a periodic timing having a regular interval during the security target data stored in the data storing unit is unused.

The storage device is connected to a processing device for implementing a process related to the security target data stored in the data storing unit, the data storing unit stores: connected time data showing a time when connected to the processing device; disconnected time data showing a time when disconnected from the processing device; a processed time showing a time when the process related to the security target data is implemented by the processing device; starting time data showing a starting time of use of the security target data; and checked time data showing a time when the validity check process of the security target data is implemented, the validity checking unit implements the validity check process of the security target data stored in the data storing unit by comparing a time period from at least one of: a time when connected to the processing device shown by the connected time data stored in the data storing unit; a time when disconnected from the processing device shown by the disconnected time data stored in the data storing unit; a time when the process related to the security target data is implemented by the processing device shown by processed time data stored in the data storing unit; a starting time of use of the security target data shown by the starting time data stored in the data storing unit; and a time when the validity check process of the security target data is implemented shown by the checked time data stored in the data storing unit until a time to start the validity check process and the time period shown by the valid duration of use data stored in the data storing unit.

The storage device operates by inputting/outputting of a periodic signal having a specific interval, the storage device is connected to a processing device for implementing a process related to the security target data stored in the data storing unit, the data storing unit stores a number of times of inputting/outputting a signal during at least one of: a time period from a time when connected to the processing device until a time to start the validity check process; a time period from a starting time of use of the security target data until the time to start the validity check process; and a time period from a time when the validity check process of the security target data has been previously done until the time to start the validity check process, and the validity checking unit implements the validity check process of the security target data stored in the data storing unit based on: the number of times of inputting/outputting the signal stored in the data storing unit; and the valid duration of use data stored in the data storing unit.

A storage method according to the present invention includes storing security target data and valid duration of use data showing a valid duration of use of the security target data in a data storing unit; and implementing a validity check process for checking if the security target data stored in the data storing unit is valid.

### Effect of the Invention

According to the present invention, it is possible not to damage the security and the convenience of the user and further to prevent improper access to the data on the terminal when the terminal is lost even if the storage device is under condition in which the communication with the server is unavailable and at the same time the PIN is leaked.

### Preferred Embodiments for Carrying out the Invention

### Embodiment 1.

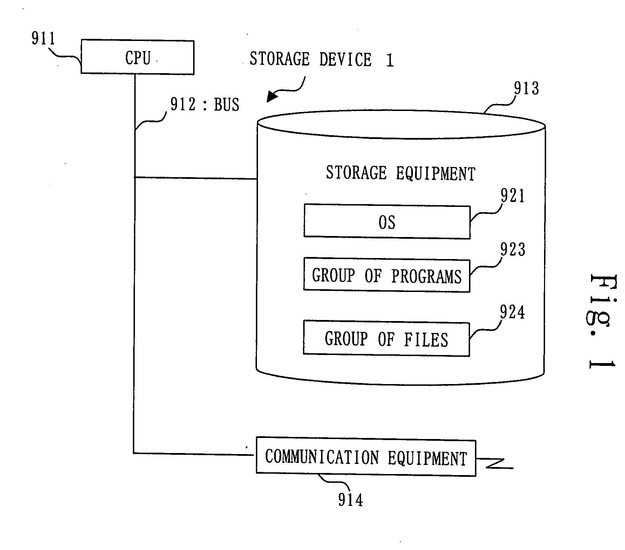

Fig. 1 shows a hardware configuration of a storage device 1 according to the first embodiment.
The storage device 1 includes storage medium such as a memory card that is a removable storage medium.
In Fig. 1, the storage device 1 has a CPU (Central Processing Unit) 911 which executes programs. The CPU 911 is connected to a ROM and a RAM for which a semi-conductor is used, a storage equipment 913 such as a magnetic disk for which a magnetic body is used, and a communication equipment 914 such as a communication board or an antenna, etc. via a bus 912.
The RAM is an example of volatile memories. The ROM and the magnetic disk are examples of non-volatile memories. These are examples of storage units.
The communication equipment 914 is connected to a LAN, the Internet, a wireless network, and a connection interface, etc. installed in a personal computer or a mobile phone, etc.

The storage equipment 913 stores an operating system (OS) 921, a group of programs 923, and a group of files 924. The group of programs 923 is executed by the CPU 911 and the operating system 921.

The group of programs 923 stores programs for implementing functions that will be explained in the following embodiment as "-- unit". The programs are read and executed by the CPU 911.
The group of files 924 stores "-- files" that will be explained in the following embodiment as "check result of --", "computation result of --", and "processed result of --".
Here, "files" can be implemented by a file system, or can be implemented on a specific address of the memory or in a register.
Further, in flowcharts that will be explained in the following embodiment, an arrow mainly shows an input/output of data, and for inputting/outputting, the data is stored in the storage equipment 913 or other recording medium such as an FD (Flexible Disk Cartridge), an optical disk, a CD (Compact Disk), an MD (Mini Disk), a DVD (Digital Versatile Disk), etc. Or the data is transmitted via a signal line or other transmission medium.

In the following explanation of embodiment, "-- unit" can be implemented by firmware stored in the ROM. Or it can be also implemented only by software, only by hardware, or a combination of software and hardware, and further, it can be a combination with firmware.

Further, programs which implement the following embodiments can be stored in the storage equipment 913 or a recording device using other recording medium such as the FD, the optical disk, the MD, the DVD, etc.

In the following, a kind of the storage device is assumed to be a memory card and explained.
However, the storage device is not limited to a memory card.

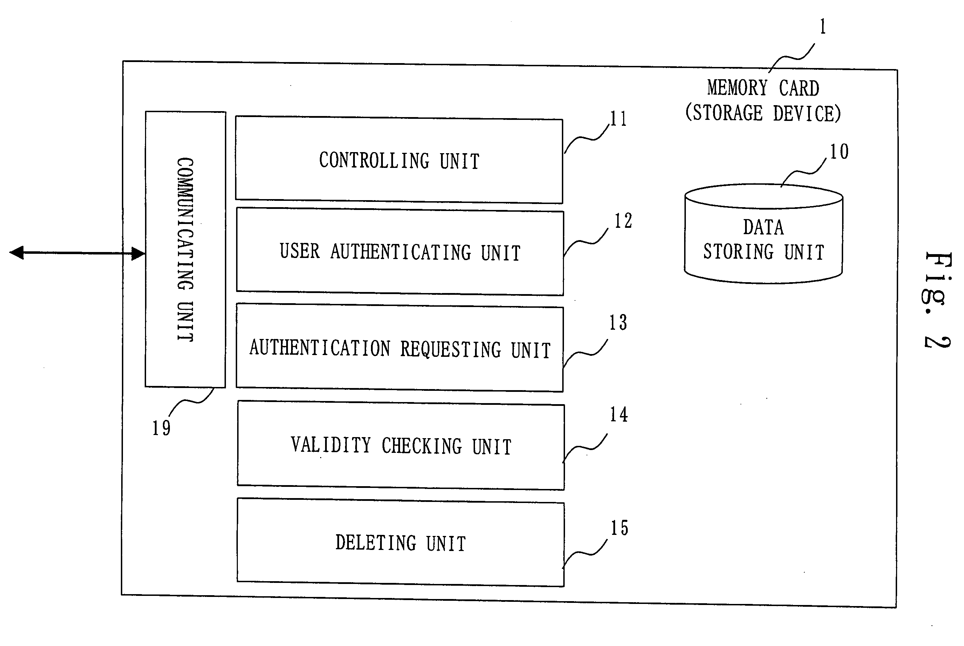

Fig. 2 is a configuration of the memory card 1 according to the first embodiment.
In the figure, the memory card 1 is a removable memory card and includes a data storing unit 10 which is a memory area storing arbitrary data (a storing unit 10, hereinafter), a controlling unit 11 which permits or denies an access to the storing unit 10 from a processing device 2 that installs the memory card 1, a user authenticating unit 12 which authenticates a user who tries the above access, an authentication requesting unit 13 which requests an authentication device 3 to authenticate an access to security object data (a file or data, hereinafter) stored in the data storing unit 10, a validity checking unit 14 which verifies validity of the data that is an object of the access, a deleting unit 15 which deletes contents of arbitrary data, and a communicating unit 19 for exchanging data or control command between each unit of the memory card 1 and the processing device 2.

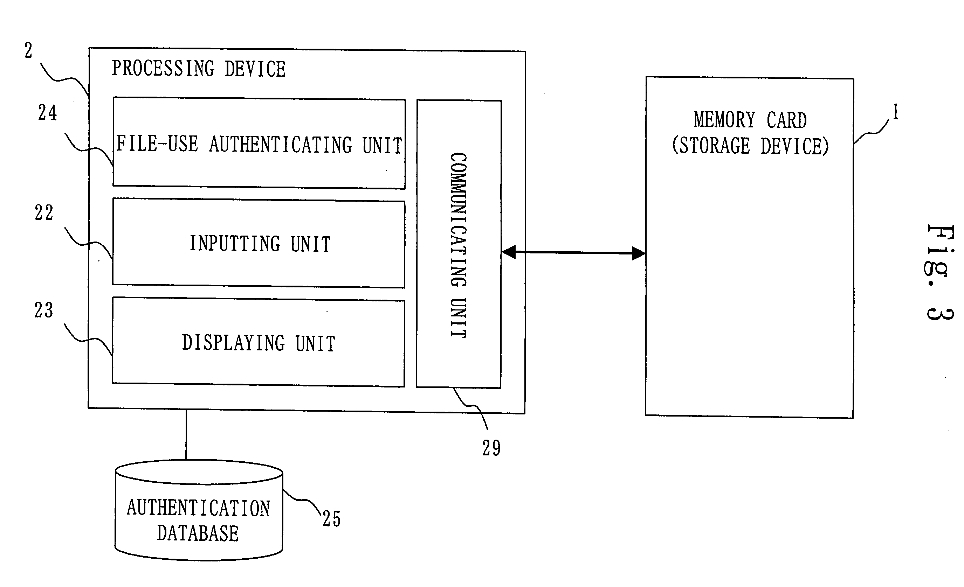

Fig. 3 is a general configuration according to the first embodiment when the processing device 2 carries out the authentication process.
The configuration of the memory card 1 and its explanation are the same as Fig. 2.
The processing device 2 includes an inputting unit 22 by which the user inputs to the processing device 2 with key input, etc., a displaying unit 23 which outputs to the user by screen display, etc., a file-use authenticating unit 24 which carries out authentication process of access to files in the memory card 1, an authentication database 25 which maintains information necessary for the authentication process, and a communicating unit 29 which exchanges data or control commands with the memory card 1.

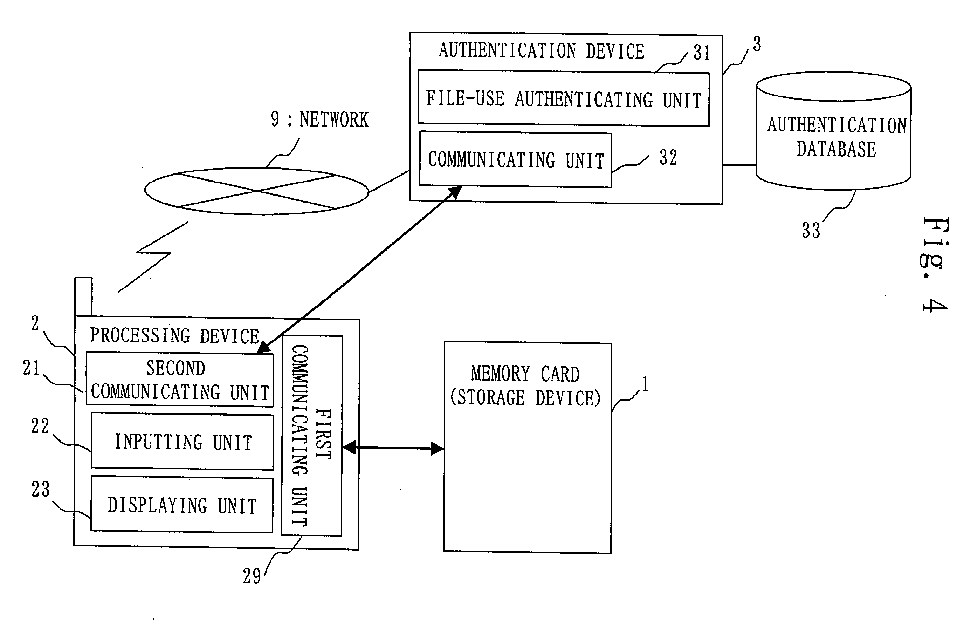

Fig. 4 is a general configuration of the first embodiment when the processing device 2 communicates with the authentication device 3 and carries out the authentication process.
The configuration of the memory card 1 and its explanation is the same as Fig. 2.
The processing device 2 includes a second communicating unit 21 which communicates with the authentication device 3 via a network 9, an inputting unit 22 by which the user inputs to the processing device 2 with key input, etc., a displaying unit 23 which outputs to the user by screen display, etc., and a communicating unit 29 which exchanges data or control commands with the memory card 1.
The authentication device 3 includes a file-use authenticating unit 31 which carries out an authentication process of access to the files in the memory card 1, a communicating unit 32 which carries out communication with the processing device 2 via the network 9, and an authentication database 33 which maintains information necessary for the authentication process.

Next, the operation will be explained. Explanation of the operation will be described using Figs. 2 and 4.
In the operation of the configuration shown in Fig. 3, among the following explanation, the operation of transmitting specific information to the authentication device 3 and of receiving the specific information from the authentication device 3 are replaced with the operation of transmitting specific information to the file-use authenticating unit 24 of the processing device 2 and of receiving the specific information from the file-use authenticating unit 24.
Further, the operation performed by the file-use authenticating unit 31 of the authentication device 3 is carried out by the file-use authenticating unit 24 of the processing device 2.
Further, the data maintained by the authentication database 33 of the authentication device 3 is maintained by the authentication database 25 of the processing device 2, and the operation of obtaining data from the authentication database 33 of the authentication device 3 is replaced with the operation of obtaining data from the authentication database 25 of the processing device 2.

First, data is written in the data storing unit 10 of the memory card 1.
At this time, a certificate that certifies properness of the data (Cert, hereinafter) is appended to the data and is written in the data storing unit 10 together with the data.
Further, at this time, both authenticated time data which shows a time when the authentication process by the authentication device 3 has been carried out last (tv, hereinafter) and an off-line access permitted time which shows a time when an access to the data can be permitted at off-line without the online authentication process (To, hereinafter) are set to 0, which are also written in the data storing unit 10 together with the data.
Each of Cert, tv, and To is written in a form that cannot be read from the processing device 2. For example, by not providing the memory card 1 with an interface to access the data, the reading from the processing device 2 is prevented.

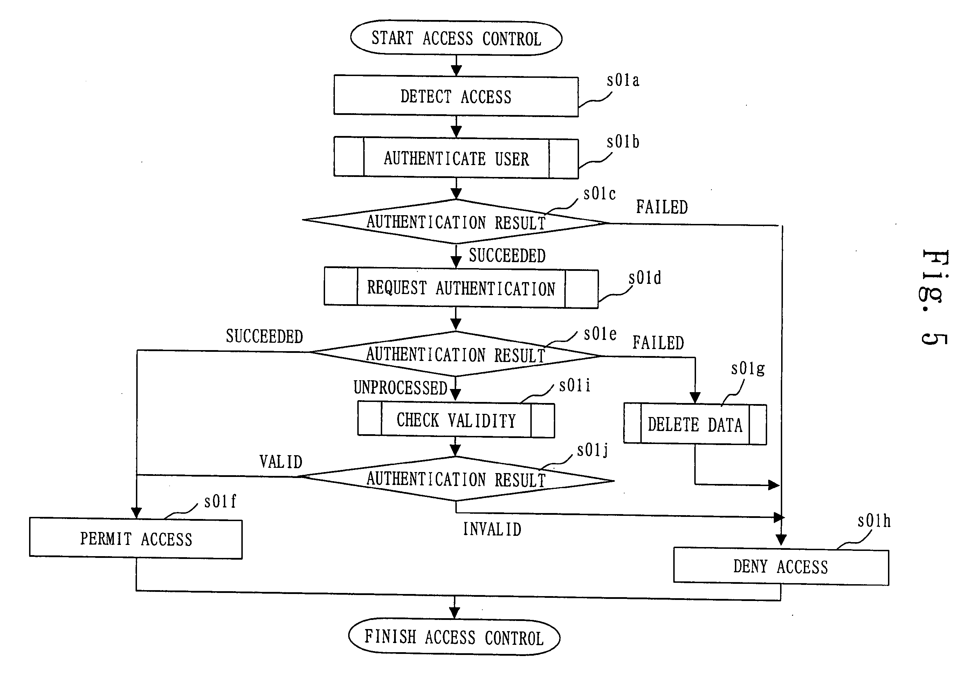

Fig. 5 is a flowchart showing an access control process of the controlling unit 11 according to the first embodiment.

When the processing device 2 tries to use, that is, to access the data stored in the data storing unit 10, the processing device 2 transfers a use request (access request, hereinafter) to the communicating unit 29, and the communicating unit 29 transfers the access request to the communicating unit 19 of the memory card 1 via the interface between the processing device 2 and the memory card 1. By this, the controlling unit 11 detects the access request (s01a).

The controlling unit 11 starts the user authenticating unit 12 and implements the authentication of the user who tries to access the data (s01b),

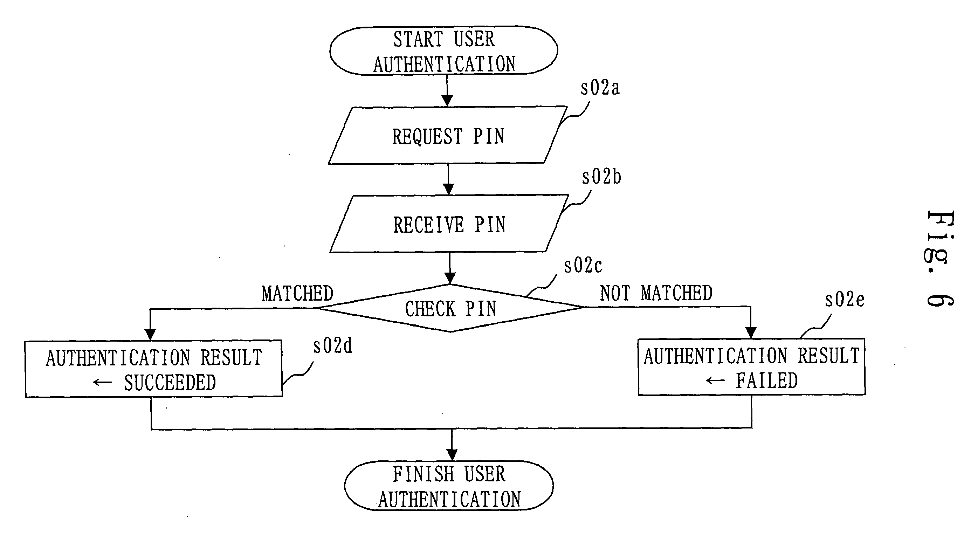

Here, Fig. 6 is a flowchart showing an example of the operation of the user authentication implemented by the user authenticating unit 12 in the first embodiment.
The authentication process of the user authenticating unit 12 at s01b will be explained referring to Fig. 6.
Here, an example of the authentication using PIN is shown; however, another authentication method can be used at the step s01b.
For example, a fingerprint, an eye print, a retina, an iris, a face shape, a voice, a tongue print, a handwriting, an IC (Integrated Circuit) card, a password, a barcode, etc. can be used for the authentication.
Further, these can be combined for the authentication.

First, the user authenticating unit 12 previously maintains a PIN of the user in a manner that cannot be read by the processing device 2. For example, the memory card 1 is not provided with an interface to read the PIN.

When started, the user authenticating unit 12 transmits data of the user authentication request to the processing device 2 via the communicating unit 19 (s02a).
The processing device 2 which receives the user authentication requesting data prompts the user to input the PIN by, for example, displaying on the displaying unit 23 that the user authentication is requested.

The processing device 2 transfers the PIN inputted by the user to the memory card 1 via the communicating unit 29. The PIN is received by the user authenticating unit 12 via the communicating unit 19 (s02b)

The user authenticating unit 12 compares the received PIN with a PIN maintained (s02c).
As a result of comparing the PINs, if the PINs are matched, the authentication result is set as "succeeded" (s02d).
As a result of comparing the PINs, if the PINs are not matched, the authentication result is set as "failed" (s02e).
Then, the authentication result data in which data showing success or failure is set and responded to the controlling unit 11.

In Fig. 5, the authentication result of the user authentication (s01b) is checked (s01c).
If the authentication result is "failed", the controlling unit 11 denies the access and the data showing the access denial is notified to the processing device 2 via the communicating unit 19 (s01h).
At this time, a change to the data storing unit 10 is not carried out.

If the authentication result is "succeeded", the controlling unit 11 starts the authentication requesting unit 13 to request authentication of the access to the data of the user (s01d).

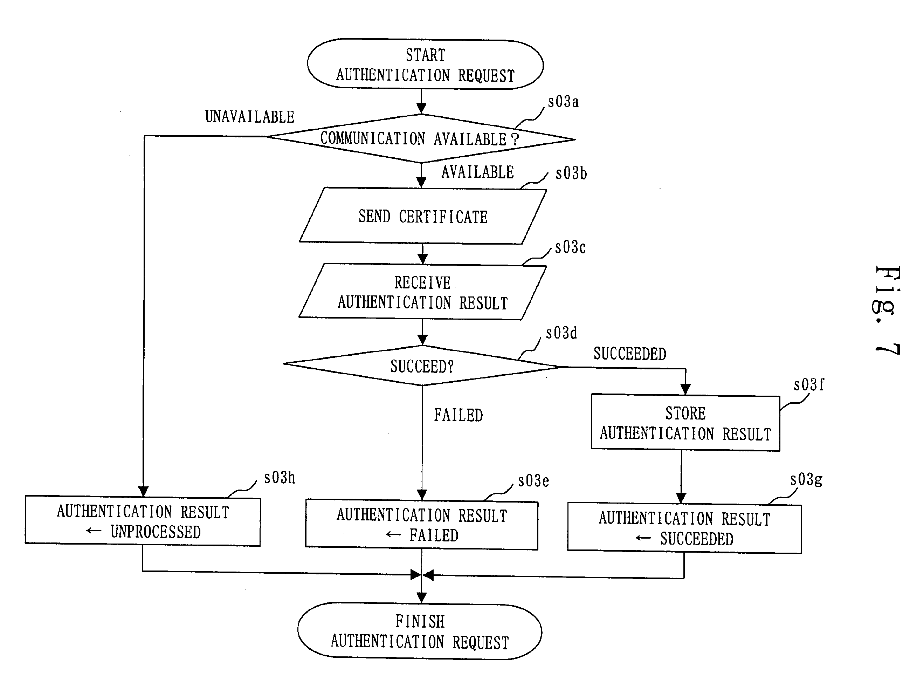

Here, Fig. 7 is a flowchart showing the authentication requesting process of the authentication requesting unit 13 according to the first embodiment.
The authentication requesting process carried out by the authentication requesting unit 13 at s01d will be explained based on Fig. 7.

The authentication requesting process is carried out by communicating with the authentication device 3 via the communicating unit 19. This can be implemented by, for example, verification of the certificate Cert using PKI.

The authentication requesting unit 13 first checks if the communication with the authentication device 3 is available or not (s03a).
This check can be implemented by inquiring the communicating unit 19 if the communication with the authentication device 3 is available, or can be implemented by checking if the subsequent steps s03b and s03c are properly performed.

First, the operation when the communication is available, that is, the operation at online will be explained.
The authentication requesting unit 13 reads the Cert of the data to which the access is requested, and sends the authentication requesting data including the Cert to the authentication device 3 using the second communicating unit 21 of the processing device 2 via the communicating unit 19 (s03b).
In order to secure the security, as implementation of the processing device 2, it is always requested to confirm the user in case of the communication using the second communicating unit 21; however, in case of the transmission of the authentication requesting data including the Cert to the authentication device 3, such confirmation of the user is not necessary.

The authentication device 3 receives the Cert by the communicating unit 32 and transfers to the file-use authenticating unit 31. The file-use authenticating unit 31 reads information necessary to verify the Cert from the authentication database 33 and carries out the verification of the Cert.
At this time, to carry out the verification of the Cert, methods disclosed in the non-patent documents 1, 2, and 3 can be used.
The file-use authenticating unit 31 which carries out the verification returns the authentication result data including either value of "succeeded" or "failed" showing the verification result (R, hereinafter), a time when the verification is done (tvn, hereinafter), and a new value of an off-line access permitted time (Ton, hereinafter) accompanied to the verification via the communicating unit 32.

The file-use authenticating unit 31 can have a CRL in the authentication database 33 if the method disclosed in, for example, the non-patent document 3 is used. When the user who loses the memory card 1 implements registration about the certificate Cert of the maintained data with the CRL held by the authentication device 3, it is possible to make the verification result "failed". In cases other than this, the verification result is "succeeded".

The authentication requesting unit 13 receives R, tvn, and Ton via the communicating unit 19 (s13c).
And the received R is checked (s03d).

If the value of R is "succeeded", the authentication result data is stored.
Here, using the authentication result data, the current time (t, hereinafter) which the clock held by the memory card shows is updated to the value of tvn, and the value of tv written in the data storing unit 10 is updated to tvn, and the value of To is updated to Ton, respectively (s03f).
Data showing "succeeded" is set to the authentication result data and responded to the controlling unit 11 (s03g).

On the other hand, if the value of R is "failed" at the step s13d, data showing "failed" is set to the authentication result data and responded to the controlling unit 11 (s03e).

Next, the operation when the communication is unavailable, that is, the operation at off-line will be explained.
When the communication with the authentication device 3 is unavailable, data showing "unprocessed" is set to the authentication result data and responded to the controlling unit 11 (s03h).

In Fig. 5, the controlling unit 11 checks the authentication result outputted by the authentication requesting unit 13 (s01e).

When the authentication result outputted by the authentication requesting unit 13 is "succeeded", the access is permitted, and data showing permission of the access is notified to the processing device 2 via the communicating unit 19 (s01f).

Here, the processing device 2 of which the access is permitted can access the data continuously from this time until the memory card 1 is notified that the access is finished. This resembles to relationship of opening and closing a file in a file system. The permission of access corresponds the permission of opening the file, and in the first embodiment, the access to the data is possible until the file is closed.
This state is expressed hereinafter as the data is being accessed.

When the authentication result outputted by the authentication requesting unit 13 is "failed", all of the data to which the access is requested and its accompanied information stored is deleted from the data storing unit 10 by the deleting unit 15 (s01g).
Then, data showing the denial of access is notified to the processing device 2 via the communicating unit 19 (s01h).
At this time, it is not necessary to notify that the data is deleted.

When the authentication result outputted by the authentication requesting unit 13 is "unprocessed", the validity checking unit 14 is started and carries out the validity verification of the data to which the user tries to access (s01i).

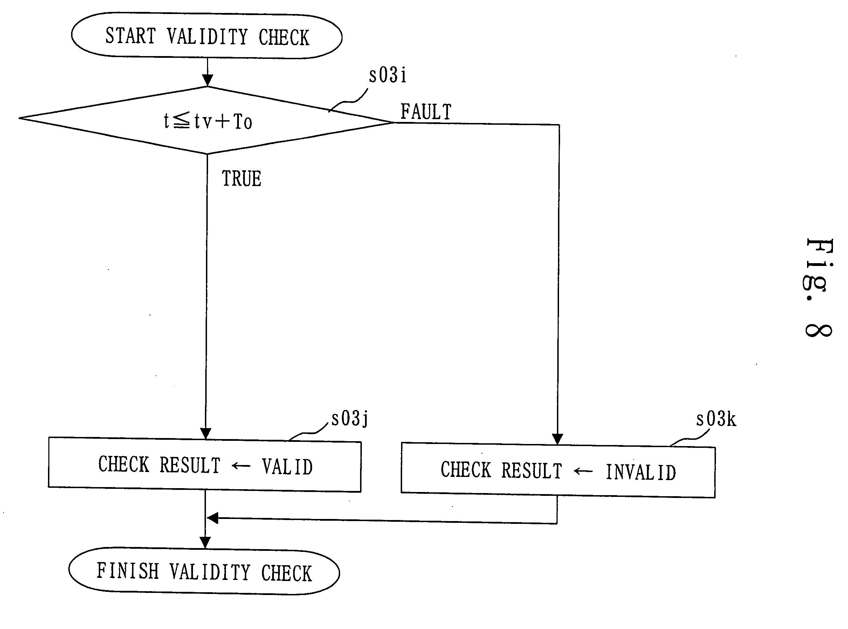

Here, Fig. 8 is a flowchart showing the validity check process of the validity checking unit 14 according to the first embodiment.
The validity check process carried out by the validity checking unit 14 at s01i will be explained based on Fig. 8.

The validity checking unit 14 reads the authenticated time tv and the off-line access permitted time To from the data storing unit 10 and checks if the current time t is before the time (tv + To) which is To after tv or not (s03i).
Here, To shows the time when an access to the data can be permitted at off-line without the online authentication process. Namely, tv + To shows an upper limit of the time when an access to the data can be permitted at off-line without the online authentication process.

If no online authentication process has been carried out since the data is written in the data storing unit 10, both tv and To are 0, and therefore, tv + To is 0, and the current time t is always after tv + To.
If the online authentication process has been carried out at least once, in the above-described procedure, the values of tv and To are updated to the values received during the online authentication process, namely, tvn and Ton, and therefore, tv + To is set, for example, as instructed by the authentication device 3.

If the current time t is before tv + To, it is judged that the access to the data can be permitted without the online authentication process, and data showing "valid" is set to the check result data and responded to the controlling unit 11 (s03j).

On the other hand, if the current time t is after tv + To, it is judged that the access to the data cannot be permitted without the online authentication process, and data showing "invalid" is set to the check result data and responded to the controlling unit 11 (s03k).

In Fig. 5, the controlling unit 11 checks the check result of the validity checking unit 14 (s01j).
When the check result data outputted by the validity checking unit 14 shows "valid", the access is permitted and data showing permission of the access is notified to the processing device 2 via the communicating unit 19 (s01f).
When the check result data outputted by the validity checking unit 14 shows "invalid", the access is denied and data showing denial of the access is notified to the processing device 2 via the communicating unit 19 (s01h).

Here, when the validity checking unit 14 judges the access to the data is "invalid", the access is denied without deleting the data, but it is also possible to start the deleting unit 15 to delete the data.

As discussed above, while at online the authentication of data access is always carried out using the authentication device 3, at off-line the access to the data can be permitted without the online authentication process only during the off-line access permitted time To that is the valid duration of use data specified by the authentication device 3, etc., which improves convenience of the user at off-line.

Further, when the communication with the authentication device 3 is unavailable, namely, the authentication process using the authentication device 3 cannot be carried out because of off-line, if the off-line access permitted time specified by the authentication device 3, etc. has passed, or if it has not been set yet, the access to the data is not permitted even if the user authentication using a PIN, etc. succeeds, which enables to prevent access to the data of the lost memory card 1 by a person other than the user even if the user authentication using a PIN, etc. is broken and the communication with the authentication device 3 is made unavailable on purpose.

Further, when the memory card 1 is lost, by registering with the authentication device 3 by the user, it is possible to make the result of the authentication process "invalid", and by deleting the data written on the memory card 1, it is possible to prevent access to the data of the lost memory card 1 by a person other than the user even if the user authentication using a PIN, etc. is broken.

### Embodiment 2.

In the above first embodiment, it has been explained that the validity check of access to the data is carried out based on the off-line access permitted time and the time period from the time when the authentication is done to the time when the validity check process starts.
In the second embodiment, it will be explained that the validity check of access to the data is carried out based on the off-line access permitted time and the time period from the time when off-line is detected to the time when the validity check process starts.
Here, parts different from the above first embodiment will be explained, and the other parts are assumed to be the same as ones in the above first embodiment.

First, when data is written in the data storing unit 10 of the memory card 1, an off-line detected time "to" showing the time when a change from online to off-line is detected is set to 0, and is written in the data storing unit 10 in addition to the data, Cert, tv, and To. As well as Cert, tv, and To, "to" is also written in a form that cannot be read by the processing device 2.

First, the online operation will be explained.
The process of the authentication requesting unit 13 is the same as one in Fig. 7 of the above first embodiment, and at s03f, if the value of the verification result R included in the authentication result data received from the authentication device 3 is "valid", the authentication result data is stored.
Here, the authentication requesting unit 13 sets the off-line detected time "to" of the data to 0.
"to" shows the time when the change from online to off-line is detected, so that once the verification succeeds online, it is reset to the initial status, namely, 0.

Next, the off-line operation will be explained.

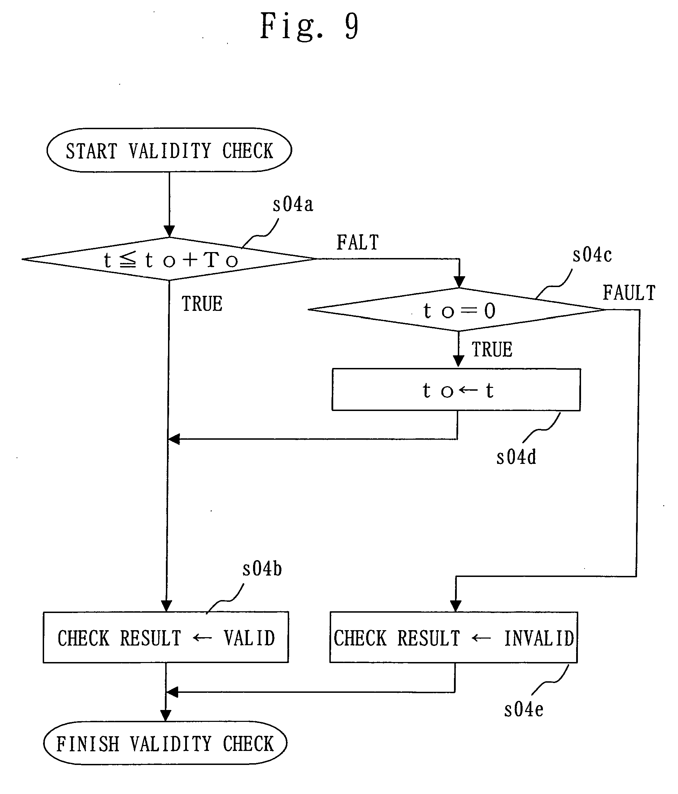

Fig. 9 is a flowchart showing the validity check process carried out by the validity checking unit 14 according to the second embodiment.
In the second embodiment, the operation of the validity check process carried out by the validity checking unit 14 will be explained based on Fig. 9 when a starting point to calculate the upper limit of the time in which access to the data can be permitted without the online authentication process at off-line is set to, instead of the authenticated time tv, an off-line detected time ("to", hereinafter) showing a disconnected time when the memory card 1 becomes unable to communicate with the authentication device 3.

The validity checking unit 14 reads the off-line detected time "to" and the off-line access permitted time To from the data storing unit 10 and checks if the current time t is before or after the time ("to" + To) which is the time To has passed since "to" (s04a).

As well as the above first embodiment, "to" + To shows the upper limit of the time when access to the data can be permitted without the online validity check while off-line.

If no authentication process or validity check process has been carried out since the data is written in the data storing unit 10, both "to" and To are 0, and therefore, "to" + To is 0, and the current time t is always after "to" + To.
If the online authentication process has been carried the last time, "to" is 0, and therefore, "to" + To is To, and unless To is set to extraordinarily impractically long, the current time t is also after "to" + To..

If the current time t is before "to" + To, it is judged that the access to the data can be permitted without the online authentication process, and data showing "valid" is set to the check result data and responded to the controlling unit 11 (s04b).

On the other hand, if the current time t is after "to" + To, it is checked if "to" equals 0 or not (s04c).

If "to" equals 0, that is, the case is either the online authentication process has been carried out or this validity check is the first validity check since the data was written. The validity checking unit 14 judges from this that the status is changed from online to off-line and sets the value of the current time t to "to" (s04d).
At this time, since t is always before "to" + To, it is judged that the access to the data can be permitted without the online authentication process, and data showing "valid" is set to the check result data and responded to the controlling unit 11 (s04b).

On the other hand, if "to" does not equal 0, that is, it shows the validity check was carried out off-line the last time without the online authentication process. At the step s04g, it has already been judged that t is after "to" + To and that the time when access to the data can be permitted without the online authentication process has been passed, so that data showing "invalid" is set to the check result data and responded to the controlling unit 11 (s04i).

Further, in the second embodiment, as well as the above first embodiment, the authentication requesting unit 13 updates the authenticated time tv at the step s03f shown in Fig. 7 when the online authentication process is carried out, so that it is also possible to carry out the process of the step s01f instead of the steps s04a, s04c, and s04d.

Selection of process to carry out can be implemented by methods in which the selection is specified by the user at an arbitrary time, in which the selection is previously specified in the memory card 1, and in which the selection is written accompanied to data together with the certificate Cert in the storing unit 10 when the data is written, etc.

As discussed above, by measuring the time period when access to the data is permitted based on the off-line access permitted time To without communicating with the authentication device 3 with setting a starting point at the off-line detected time "to" instead of the authenticated time tv, it is judged to be always safe during the online authentication process is carried out, and only for the off-line use, the access to the data can be permitted without the online authentication process by providing a limit, which enables to improve convenience of the user while the security is maintained.

Further, by enabling to select either of the authenticated time tv and the off-line detected time "to" as a starting point for measuring the off-line access permitted time To, it is possible to adjust security and convenience among the user, the issuer of the memory card, the manager of the authentication device, the data creator, etc. according to their will, the service forms, or the contents of the data.

### Embodiment 3.

In the third embodiment, it is explained that the validity check of the access to the data is carried out during the data is being accessed.
Here, parts different from each embodiment will be explained, and the other parts are assumed to be the same as ones of each embodiment.

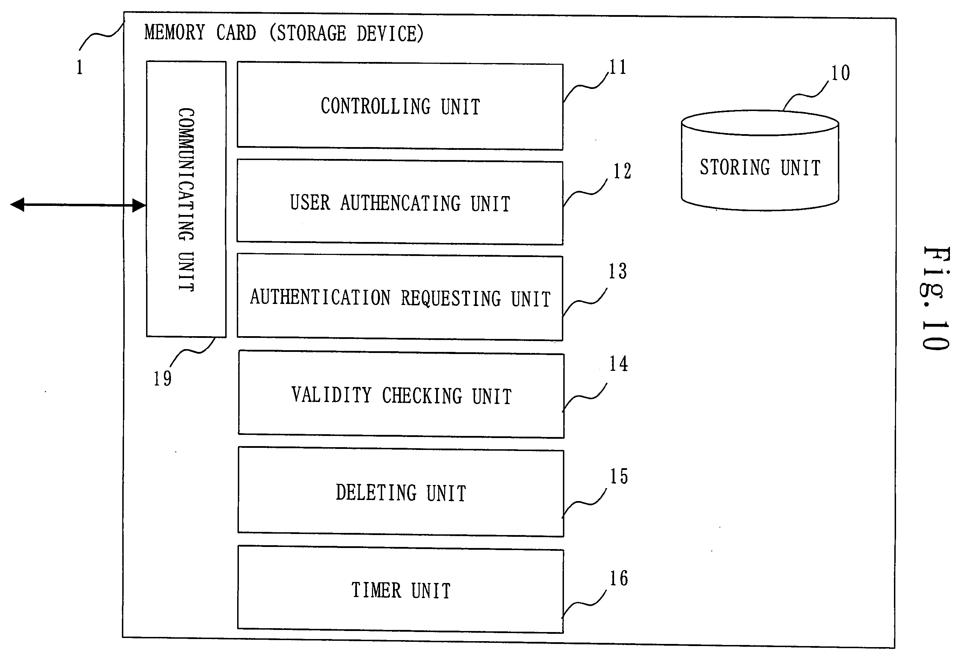

Fig. 10 shows a configuration of the memory card 1 according to the third embodiment.
The configuration except the memory card 1 is the same as one shown in Figs. 3 and 4 of the first embodiment.
In the third embodiment, the memory card 1 includes a timer unit 16 which notifies each unit periodically with a regular interval in addition to each unit included in the memory card 1 shown in Fig. 2 of the first embodiment.

Next, the operation according to the third embodiment will be explained by focusing on the difference with the above first embodiment.
First, when the data is written in the data storing unit 10 of the memory card 1, the number of extensions Co of the off-line access permitted time showing the remaining number of times to permit extension of the off-line access permitted time when the off-line access permitted time To has passed during accessing the data is set to 0 and written in the data storing unit 10 in addition to the data, Cert, tv, and To. As well as Cert, tv, and To, Co is also written in a form that cannot be read by the processing device 2.

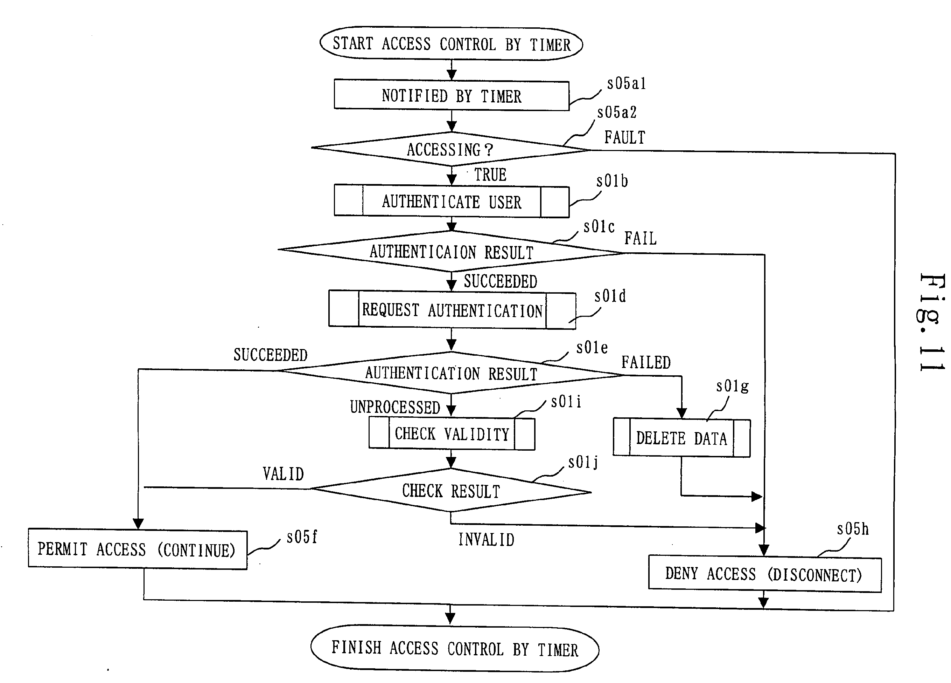

Fig. 11 is a flowchart showing an access controlling process by the controlling unit 11 according to the third embodiment.
In the third embodiment, the operation of the memory card 1 accompanied to the access control carried out by the controlling unit 11 by the notice from the timer carried out by the timer unit 16 will be explained based on Fig. 11.
In the above first embodiment, the controlling unit 11 starts the operation by detecting the access request from the processing device 2 at s01a in Fig. 5.
In the third embodiment, the controlling unit 11 starts the operation by the notice from the timer implemented by the timer unit 16 (a05a1).

The controlling unit 11 receives the notice from the timer unit 16 (s05a1).
After receiving the notice from the timer unit 16, it is checked if the data is being accessed or not (s05a2).
If no access is being carried out, the process terminates.
If the data is being accessed, the controlling unit 11 starts the user authenticating unit 12 to implement the authentication of the user who is accessing the data (s01b), and if the user authentication succeeds (s01c), either the authentication process by the authentication device 3 (s01d) or the validity check process by the validity checking unit 14 (s01i) is carried out to judge the access to the data should be permitted or denied, which is notified to the processing device 2.

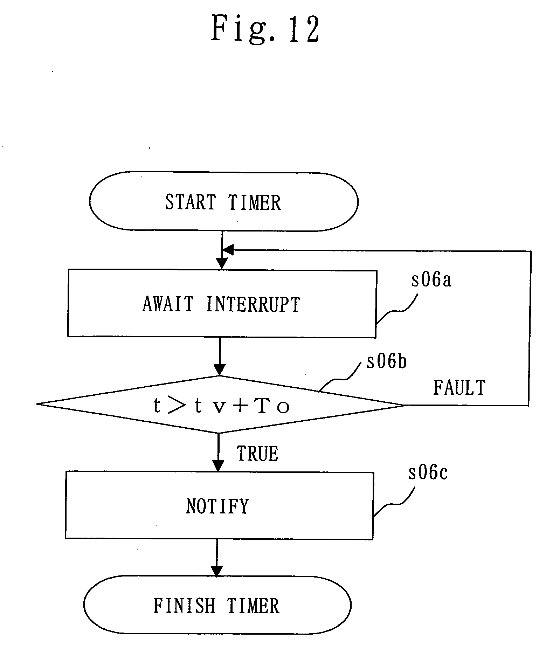

Fig. 12 is a flowchart showing an example of the operation of the timer carried out by the timer unit 16 according to the third embodiment.

The timer unit 16 awaits generation of a periodic interrupts provided by hardware of the memory card 1, etc. (s06a).
At each of the interrupts, the authenticated time tv and the off-line access permitted time To is read from the data storing unit 10, and it is checked if the current time t is after the time (tv + To) which is To after tv or not (s06b).
If t is before tv + To, the interrupts are awaited again (s06a).
If t is after tv + To, data showing that the off-line access permitted time has been expired is notified to the controlling unit 11, and the timer is finished (s06c).
This notice shows that the current time t exceeds the upper limit of the time tv + To for permitting access to the data off-line without the online authentication process.

Next, the online authentication process and the off-line validity check process will be explained.
First, the online operation will be explained.
In the authentication requesting process shown in Fig. 7 of the first embodiment, the authentication requesting unit 13 sends the certificate Cert to the authentication device 3 (s03b), the authentication request data including a new value Con of the number of extensions of the off-line access permitted time accompanied to the verification in addition to the verification result R of Cert carried out by the file-use authenticating unit 31 of the authentication device 3, the time tvn when the verification is done, and the new value Ton of the off-line access permitted time is received via the communicating unit 19 (s03c).
Con is a value which is equal to or greater than 0, and the value can be previously determined according to the authentication device 3 and the security policy of the data.
The authentication requesting unit 13 checks the received value of R (s03d), and when the value of the received R is "succeeded", the authentication requesting unit 13 stores the authentication result data.
Here, the authentication requesting unit 13 updates the value of effective Co by Con (s03f).

Next, the off-line operation will be explained.

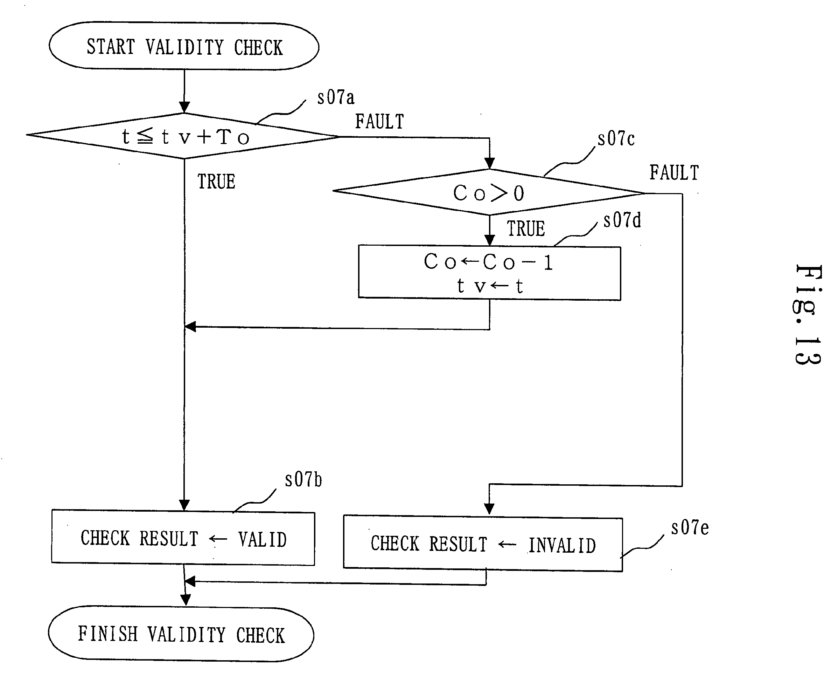

Fig. 13 is a flowchart showing the operation of the validity check process carried out by the validity checking unit 14 according to the third embodiment.

As well as the step s03i in Fig. 8 of the above first embodiment, the validity checking unit 14 checks if the current time t is before the time (tv + To) which is To after tv or not (s07a) according to the authenticated time tv and the off-line access permitted time To read from the data storing unit 10

If t is after tv + To, the check result is set "invalid" in the above first embodiment (s03k); however, in the third embodiment, first the validity checking unit 14 reads the number of extensions Co of the off-line access permitted time from the data storing unit 10, and it is checked if Co is greater than 0 or not (s07c).

If Co is greater than 0, the value of Co is decremented, and the value of the current time t is set to the authenticated time tv (s07d).
Then, data showing "valid" is set to the check result data (s07b).
This equals to extend the online access permitting time, namely, the time for continuing or permitting the access to the data without the online authentication process by the value of To.

On the other hand, if Co is 0, data showing "invalid" is set to the authentication result (s07e).

When no authentication process or no validity check process has been carried out since the data is written in the data storing unit 10, the received Con is originally 0, or Con times of extensions have been done after the last online authentication process, Co is 0, and the check result becomes "invalid" as well as the above first embodiment.
Co is not 0, and the off-line access permitted time can be extended by To when the extensions have not been done Con times after the last online authentication process.
Here, it is preferable to limit the implementation of this flow when an excess of the off-line access permitted time is observed by the timer, and the user authentication, the authentication process, and the validity check process are carried out during the data is being accessed. Further, when such extension is done, it is preferable to always implement the user authentication.

In Fig. 5, after the validity check is done (s01i) as discussed above, in the above first embodiment, the controlling unit 11 judges the check result (s01j), and the check result if "valid", data showing the permission of the access is notified to the processing device 2 via the communicating unit 19 (s01f), and if the check result is "invalid", data showing the denial of the access is notified to the processing device 2 via the communicating unit 19 (s01h).

In Fig. 11, according to the third embodiment, the access controlling process is started by the timer, not by the detection of the access request, and it is during the data is being accessed.
Because of this, the controlling unit 11 judges the check result (s01j), if the check result if "valid", data showing the permission of continuing the access is notified to the processing device 2 via the communicating unit 19, and if the check result is "invalid", data showing the denial of continuing the access is notified to the processing device 2 via the communicating unit 19, and further, the access to the data that is currently done is suspended (s05h).

As discussed above, the excess of the off-line access permitted time To is observed by the timer, and the user authentication, the authentication process, the validity check process, and the access judgment are implemented, not by the detection of the access request, by the notification from the timer unit 16, which enables to instantly implement the user authentication, the authentication process, and the validity check of the excess of the off-line access permitted time To during the data is being accessed, so that the security of the data can be secured even if the data is accessed for a long time.

Further, only while the data, to which the access is permitted through the authentication process and the validity check process which are the same as ones in the above first embodiment, is being accessed, by extending the off-line access permitted time without communicating with the authentication device 3 according to the number of times specified by the authentication device 3, the convenience of the user can be increased more without decreasing the security.

### Embodiment 4.

In the fourth embodiment, another case will be explained in which a second user authenticating unit is included.
Here, parts different from each embodiment will be explained, and the other parts are assumed to be the same as ones in each of the embodiments.

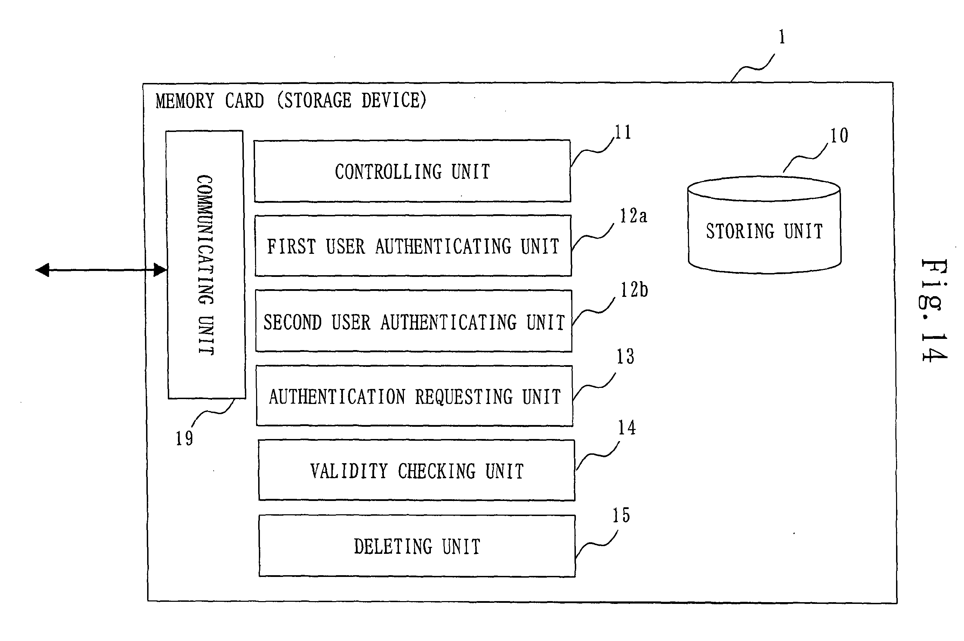

Fig. 14 shows a configuration of the memory card 1 according to the fourth embodiment.
The configuration except the memory card 1 is the same as ones shown in Figs. 3 and 4 of the above first embodiment.

In the fourth embodiment, the memory card 1 includes a second user authenticating unit 12b which can implement authentication with some degree of certainty without the authentication device 3 in addition to each part included in the memory card 1 shown in Fig. 2 of the above first embodiment.
Here, the user authenticating unit 12 shown in Fig. 2 of the above first embodiment is referred to as a first user authenticating unit 12a.

Next, the operation according to the fourth embodiment will be explained by focusing on the difference with the above first embodiment.
First, when data is written in the data storing unit 10 of the memory card 1, the number of uses Ca of alternative authentication that shows the remaining number of times for carrying out an alternative authentication process by the second user authenticating unit 12b is set to 0 and is written in the data storing unit 10 in addition to the data, Cert, tv, and To. Ca is also written in a form that cannot be read by the processing device 2 as well as Cert, tv, and To.

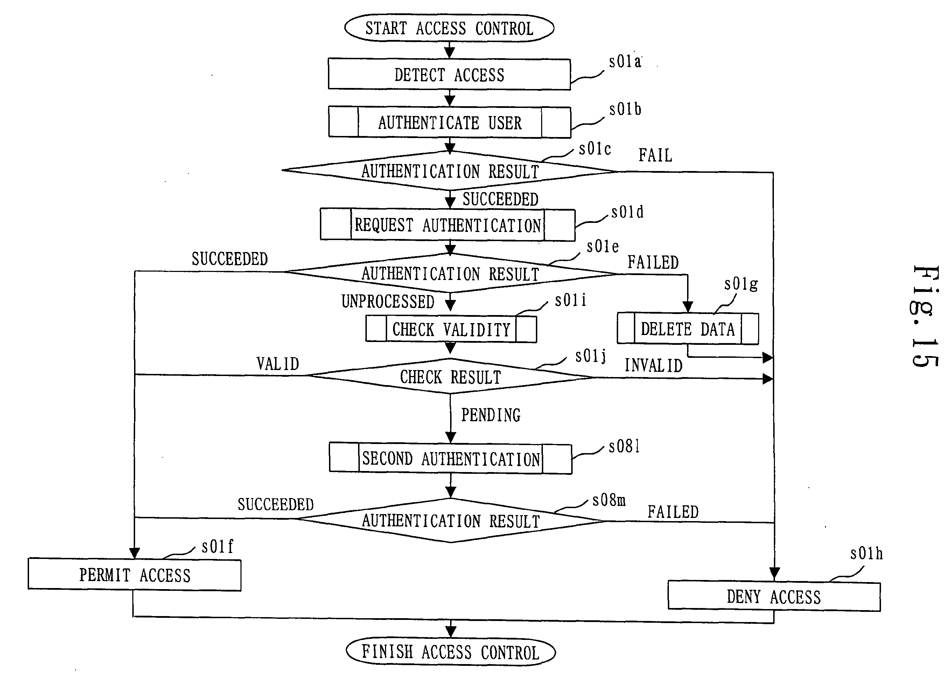

Fig. 15 is a flowchart showing an access controlling process by the controlling unit 11 according to the fourth embodiment.
In Fig. 15, the controlling unit 11 starts the second user authenticating unit 12b when the check result of the validity checking unit 14 shows "pending" (s081).
The authentication result of the second user authenticating unit 12b is checked (s08m), and if the authentication result shows "succeeded", the access is permitted, and data showing the permission of the access is notified to the processing device 2 (s01f).
If the authentication result shows "failed", the access is denied, and data showing the denial of the access is notified to the processing device 2 (s01h).

Next, the online authentication process and the off-line validity check process, and the second authentication process will be explained.

First, the online operation will be explained.
In Fig. 7 of the above first embodiment, the validity checking unit 14 sends the certificate Cert to the authentication device 3 (s03b) and receives via the communicating unit 19 the authentication result data including a new value Can of the number of uses of alternative authentication accompanied to the second authentication process in addition to the verification result R of the Cert carried out by the file-use authenticating unit 31 of the authentication device 3, the verifying time tvn, and a new value Ton of the off-line access permitted time accompanied to the verification (s03c).

Can is a value equal to or greater than 0, and it is possible to determine the value previously according to the authentication device 3 and the security policy of the data.

The authentication requesting unit 13 checks the value of R included in the received authentication result data (s03d).
As a result of checking, if the value of R shows "succeeded", the authentication result data is stored.
Here, the authentication requesting unit 13 updates the value of Ca to Can (s03f).

Next, the off-line operation will be explained.

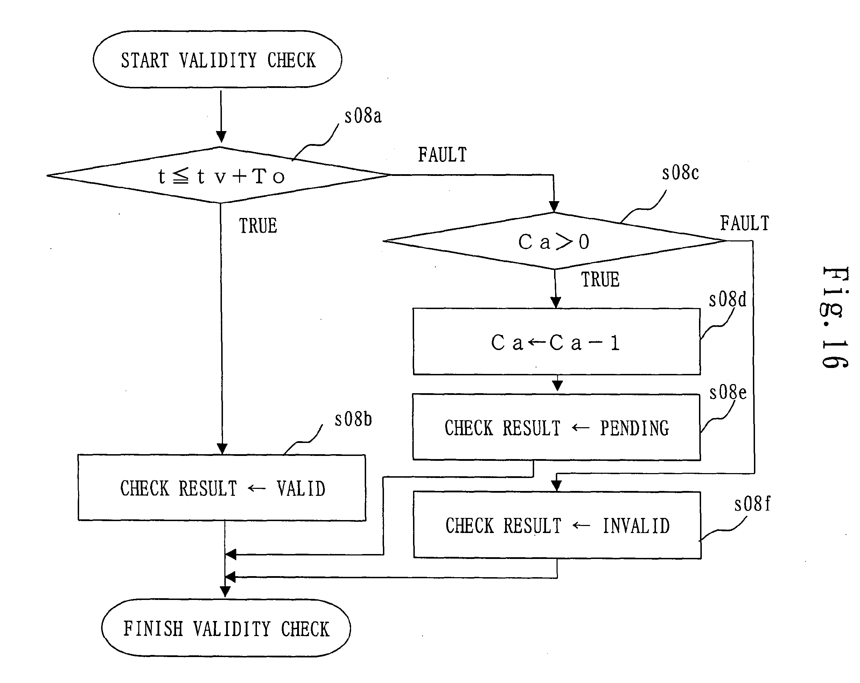

Fig. 16 is a flowchart showing the validity check process carried out by the validity checking unit 14 according to the fourth embodiment.
The validity checking unit 14, as well as the step s03i in Fig. 8 of the above first embodiment, checks if the current time t is before the time (tv + To) which is To after tv or not based on the authenticated time tv and the off-line access permitted time To read from the data storing unit 10 (s08a).

If t is after tv + To, the check result is made "invalid" in the above first embodiment; however, in the fourth embodiment, the validity checking unit 14 first reads the number of times Ca for using alternative authentication from the data storing unit 10 and checks if Ca is greater than 0 or not (s08c).

If Ca is greater than 0, the value of Ca is decreased by 1 (s08d), and data showing "pending" is set to the check result data (s08e).

On the other hand, if Ca is 0, data showing "invalid" is set to the check result data (s08f).

When no authentication process or no validity check process has been carried out since the data is written in the data storing unit 10, the received Can is originally 0, or the second authentication process by the user authenticating unit 12 has been already done Can times after the last online authentication process, Ca is 0, and the check result is made "invalid" as well as the first embodiment.

Ca is not 0 and it is possible to implement the second authentication process is when the second authentication process has not been done Can times after the last online authentication process.

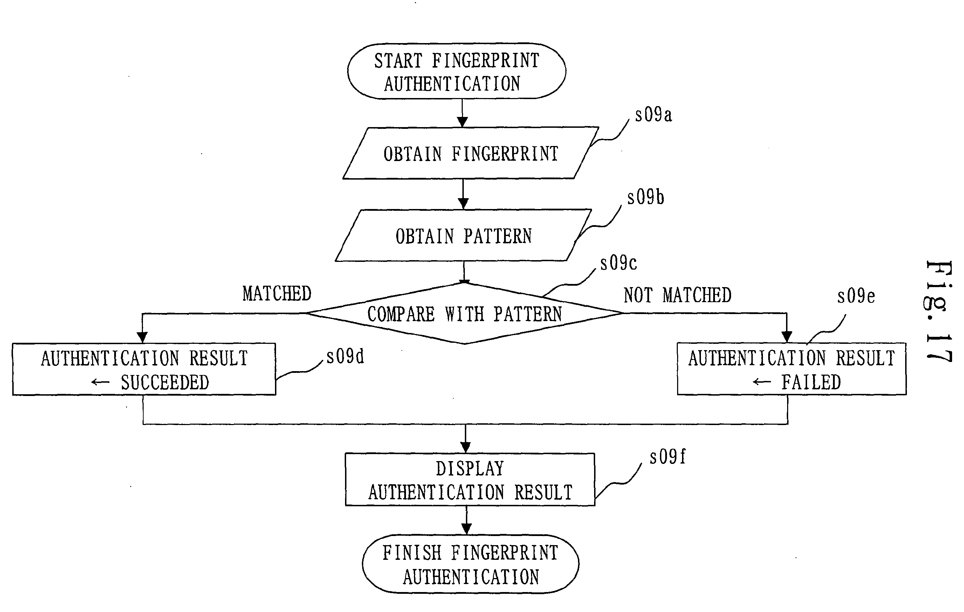

Fig. 17 is a flowchart showing one example of the operation of the second authentication process carried out by the second user authenticating unit 12b according to the fourth embodiment.

The second authentication process is not an authentication carried out using the authentication device 3; however, an authenticating method which can guarantee the correctness of the user and the validity of the data more surely than the user authentication carried out using PIN, etc.
Here, an example of the second authentication process using finger print authentication will be shown; however, another authenticating method can be applied.
For example, the authentication can be done using eye print, retinas, an iris, a facial shape, voice, a personal identification number, tongue print, handwriting, an IC card, a password, a barcode, etc.
Further, these can be combined and used for the authentication.
In this case, the second user authenticating unit 12b includes a device for carrying out fingerprint authentication and further maintains in advance pattern information in a manner that can never be read by the processing device 2. For example, the memory card 1 is not provided with an interface to read the pattern information which the processing device 2 uses for the fingerprint authentication of the user.

When started, the second user authenticating unit 12b obtains fingerprint of the user by, for example, displaying that the second authentication process by fingerprint authentication will be carried out on the displaying unit 23 of the processing device 2 via the communicating unit 19 and using a device for the fingerprint authentication (s09a).
Then, pattern information used for the fingerprint authentication of the user is obtained from the data storing unit 10 (s09b).

Next, the fingerprint information obtained from the fingerprint authentication device and the pattern information obtained from the data storing unit 10 are compared (s09c).
If they match, data showing "succeeded" is set to the authentication result data (s09d), if they don't match, data showing "failed" is set to the authentication result data (s09e), the authentication result is displayed on the displaying unit 23 of the processing device 2 via the communicating unit 19 (s09f), and the authentication result is sent to the controlling unit 11.

This authentication result permits the access to the data only for the access control this time, since the validity of the data, namely, that there is no events such that the memory card 1 is lost, etc. is judged from the fact that the second authentication process has succeeded without extending the off-line access permitted time.

As discussed above, when the authentication process using the authentication device 3 cannot be done because of off-line, the second authentication process which can discriminate the correctness of the user and the validity of the data more surely than the user authentication using PIN is carried out, and the access to the data is permitted if the second authentication process succeeds even if the off-line access permitted time To specified by the authentication device 3, etc. has passed or even if it is not set. This improves the off-line convenience for the correct user, and on the other hand, even if the user authentication using PIN, etc. is broken, it is possible to prevent access to the data stored in the memory card 1 which has been lost by a person other than the correct user.

### Embodiment 5.

In the fifth embodiment, another case will be explained in which permission of the access to the data is discriminated by a data maintainable time that is a time period when the data can be maintained other than the off-line access permitted time.
Here, parts different from the other embodiments will be explained, and the other parts are assumed to be the same as ones in each embodiment.

A configuration of the fifth embodiment is the same as ones shown in Figs. 10, 3, and 4 of the above third embodiment.
The operation of the fifth embodiment will be explained by focusing on the difference with the above first embodiment.
First, as well as the certificate Cert, a data storing time ts showing a time when the data is written in the memory card 1 and a data maintainable time Th showing a time period in which the data can be maintained on the memory card 1 are accompanied to the data, and these are written together with the data when the data is written in the data storing unit 10 of the memory card 1. The data storing time ts and the data maintainable time Th are also written in a form that cannot be read by the processing device 2 as well as Cert, tv, and To.

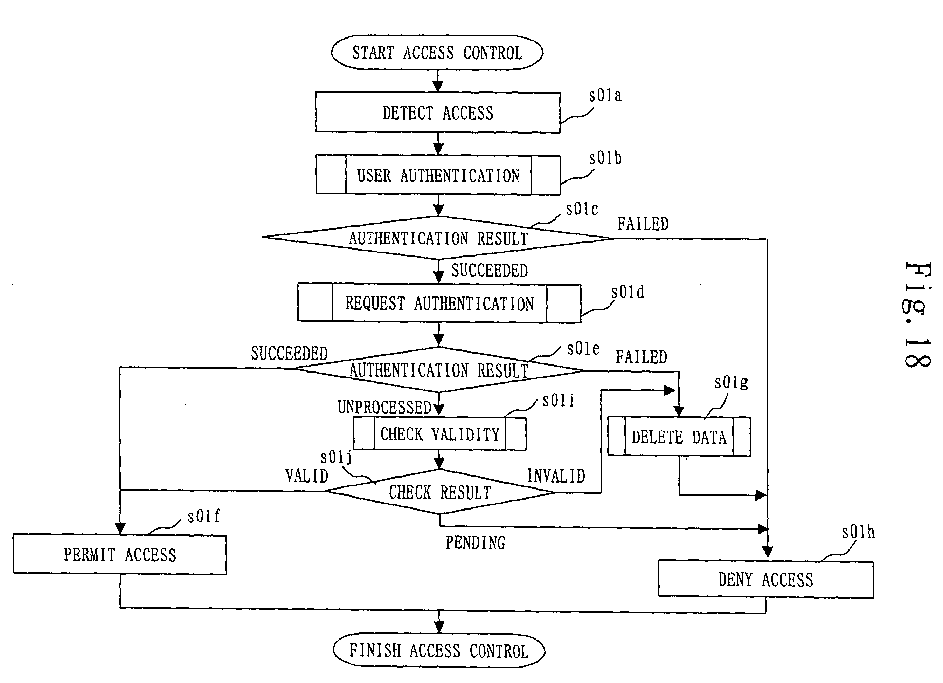

Fig. 18 is a flowchart showing access controlling process of the controlling unit 11 according to the fifth embodiment.
The controlling unit 11 judges the validity check result by the validity checking unit 14 (s01j).
When the check result shows "valid", the access is permitted, and data showing the permission of the access is notified to the processing device 2 (s01f).
Here, when the check result shows "invalid", the deleting unit 15 is started to delete the data (s01g), and data showing the denial of the access is notified to the processing device 2 (s01h).
Further, when the check result shows "pending", data showing the denial of the access is notified to the processing device 2 (s01h).

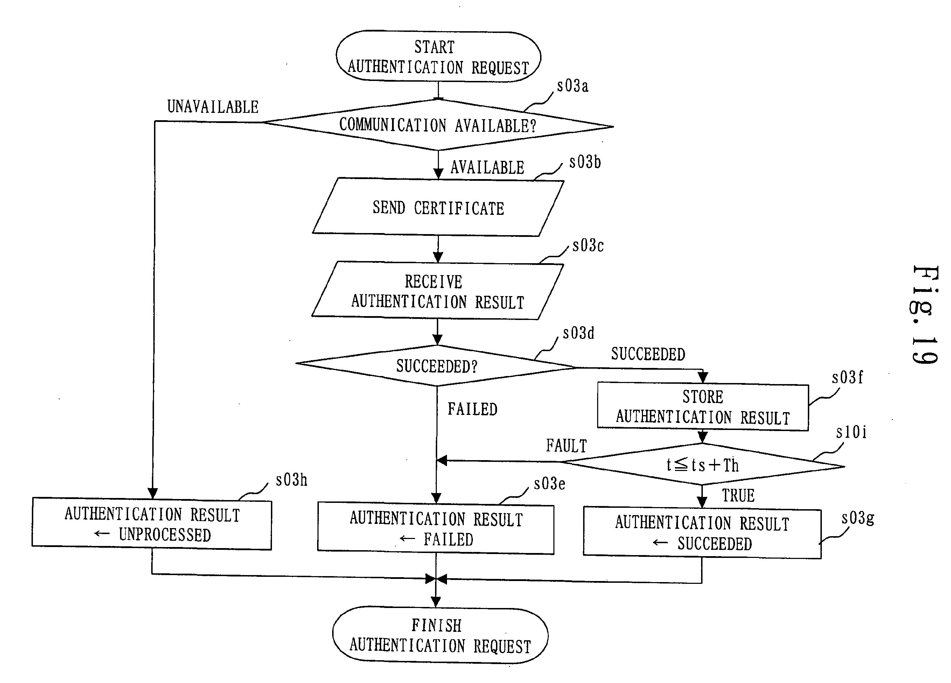

Fig. 19 is a flowchart showing the authentication requesting process of the authentication requesting unit 13 according to the fifth embodiment.
In the above first embodiment, in Fig. 7, when the online authentication by the authentication device 3 is carried out and the result R is "succeeded", the authentication requesting unit 13 sets data showing "succeeded" to the authentication result data and sends a response to the controlling unit 11 (s03g).

In the fifth embodiment, when R is "valid" online, the authentication requesting unit 13 reads the data storing time ts and the data maintainable time Th of the data from the data storing unit 10 and checks if the current time t is before (ts + Th) that is Th after ts (s10i).
Here, ts + Th shows the upper limit of time until which the data can be maintained in the memory card 1. This upper limit of time is characterized to be defined only by information accompanied to the data.

If the current time t is before ts + Th, the authentication requesting unit 13 sets data showing "succeeded" to the authentication result data and sends a response to the controlling unit 11 (s03g).
In Fig. 18, when the authentication result shows "succeeded" (s01e), the controlling unit 11 notifies the processing device 2 of data showing the permission of the data via the communicating unit 19 (s01f).

On the other hand, if t is after ts + Th, data showing "failed" is set to the authentication result data and responded to the controlling unit 11 (s03e).
In Fig. 18, if the authentication result shows "failed" (s01e), the controlling unit 11 deletes all of the data to which the access is requested and its accompanied information stored from the data storing unit 10 by the deleting unit 15 (s01g), and data showing the denial of access is notified to the processing device 2 via the communicating unit 19 (s01h).

Fig. 20 is a flowchart showing the operation of the validity check process that is carried out by the validity checking unit 14.

In Fig. 8 of the above first embodiment, the validity checking unit 14 sets data showing "valid" to the check result data and responds to the controlling unit 11 at off-line if the current time t is before the time expressed by a sum of the authenticating tie tv and the off-line access permitting time To (s03j).

In the fifth embodiment, when t is before the time expressed by the sum of tv and To at off-line, the validity checking unit 14 reads the data storing time ts and the data maintainable time Th from the data storing unit 10 and checks if the current time t is before the time (ts + Th) which is Th after ts or not (s10b).
Here, ts + Th shows the upper limit of the time period during which the data can be maintained in the memory card 1. It is characterized that this upper limit of time is defined only by the information accompanied to the data.

The validity checking unit 14 sets data showing "valid" to the check result data and responds to the controlling unit 11 if the current time t is before ts + Th (s10d).
In Fig. 18, if the check result shows "valid" (s01j), the controlling unit 11 notifies data showing the permission of access to the processing device 2 via the communicating unit 19 (s01f).

On the other hand, if t is after ts + Th, data showing "invalid" is set to the check result data and responded to the controlling unit 11 (s10c).
In Fig. 18, if the check result shows "invalid" (s01j), the controlling unit 11 deletes all of the data to which the access is requested and its accompanied information stored from the data storing unit 10 by the deleting unit 15 (s01g), and data showing the denial of access is notified to the processing device 2 via the communicating unit 19 (s01h).

As discussed above, by accompanying the data storing time ts and the data maintainable time Th to the data, setting the time limit until which the memory card 1 can maintain the data, not permitting the access to the data which exceeds the time limit, and deleting the data from the memory card on detecting such access, the manager of the authentication device, the data creator, etc. can set the time limit according to its intention, the service forms or the contents of the data, which prevents keeping the data in the memory card 1 for an unexpectedly long time and increasing possibility of improper access to the data in the memory card 1.

### Embodiment 6.

In the sixth embodiment, another case will be explained in which the authentication process and the validity check process are carried out at the timing of connecting the memory card 1 to the processing device 2.
Here, parts different from each embodiment will be explained, and the other parts are assumed to be the same as ones in each embodiment.

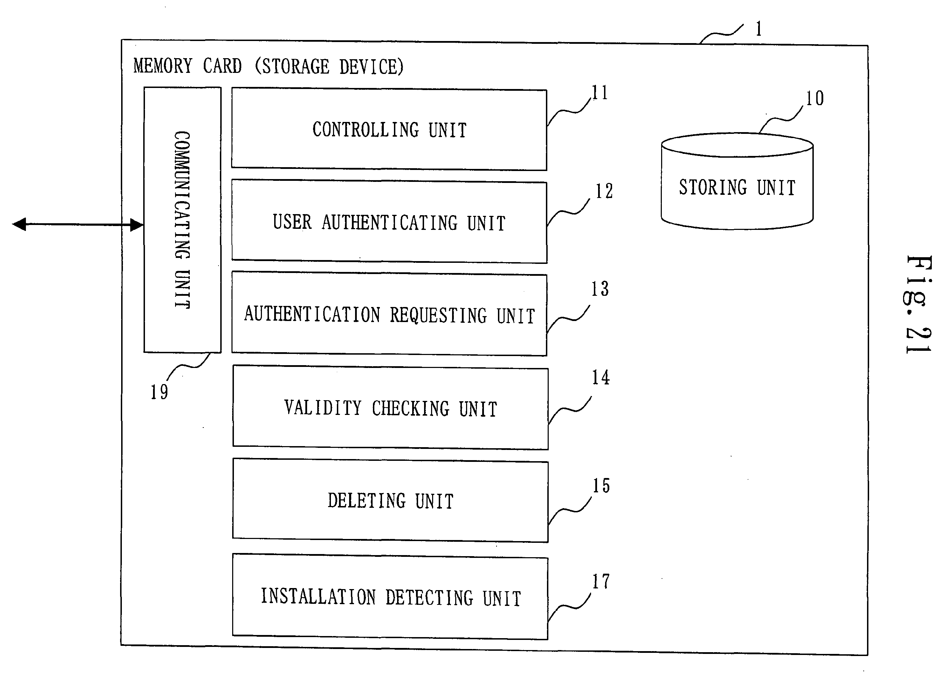

Fig. 21 shows a configuration of the memory card 1 according to the sixth embodiment.
The configuration except the memory card 1 is the same as ones shown in Figs. 3 and 4 of the above first embodiment.

In the sixth embodiment, in addition to each part included in the memory card 1 shown in Fig. 2 of the above first embodiment, the memory card 1 includes a installation detecting unit 17 detecting installation of the memory card 1 to the processing device 2.

Next, the operation will be explained.

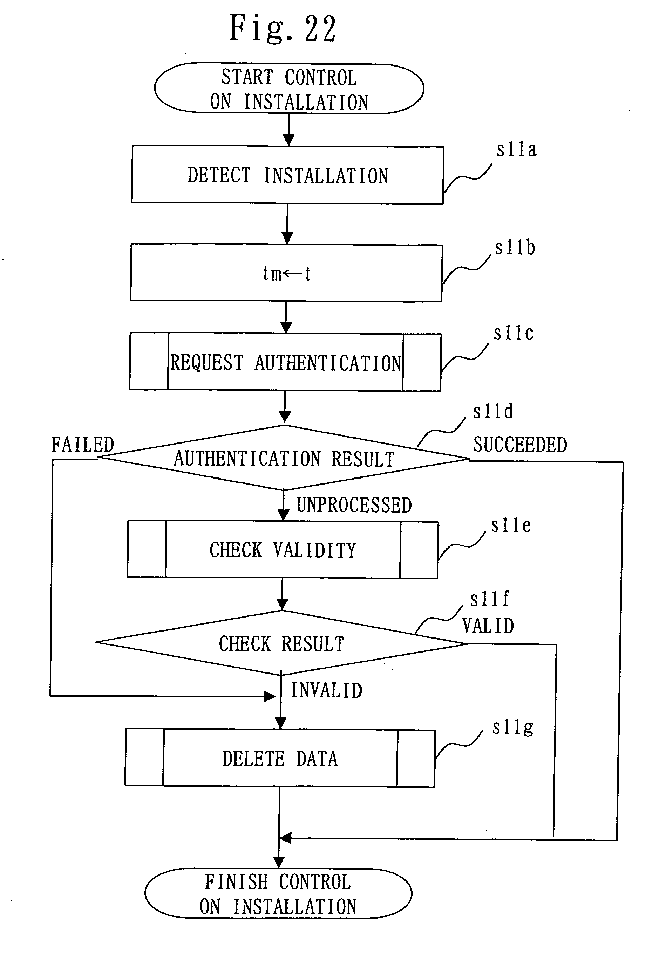

Fig. 22 is a flowchart showing a controlling process on installation according to the sixth embodiment.
The operation of the memory card 1 accompanied to the authentication process and the validity check process carried out by activation from the installation detecting unit 17 will be explained referring to Fig. 22.

The operation of the memory card 1 in case of writing data in the data storing unit 10 of the memory card 1 is the same as one in the above first embodiment.

Hereinafter, the explanation will be done by focusing on the difference with the first embodiment.
The data storing unit 10 of the memory card 1 keeps an exclusive area, and a memory card installed time tm showing the time when the memory card 1 is installed is recorded in the area. tm is written in a form that cannot be read from the processing device 2. For example, the processing device 2 is not provided with an interface to read tm.

On installing the memory card 1 to the processing device 2, the installation detecting unit 17 detects the fact that the installation is done and starts the controlling unit 11 (s11a).

The installation detecting unit 17 sets the value of the current time t to tm recorded in the data storing unit 10 (s11b).
Accordingly, the memory card 1 always stores the newest time of installing the memory card.

The controlling unit 11 starts the authentication requesting unit 13 and carries out the authentication process of the data stored in the data storing unit 10 (s11c).

The authentication result of the authentication requesting unit 13 is checked (s11d), if the authentication result shows "succeeded", the process terminates, and if the authentication result shows "failed", a deleting unit 15 is started and the data and its accompanied information stored are deleted from the data storing unit 10 (s11g).

Further, when the authentication result of the authentication requesting unit 13 shows "unprocessed", the validity checking unit 14 is started and the validity check of the data is carried out (s11e).
The procedure of the validity check is the same as Fig. 8 of the above first embodiment.

The controlling unit 11 checks the check result of the validity checking unit 14 (s11f), and if the check result shows "valid", the controlling unit 11 finishes the process.

On the other hand, if the check result shows "invalid", all of the data and its accompanied information stored are deleted from the data storing unit 10 by the deleting unit 15 (s11g).

As discussed above, when the authentication process and the validity check are carried out by the installation detecting unit 17 on installing the memory card 1, the configuration can be such that the time period in which access to the data is permitted regardless of off-line by the off-line access permitted time To is measured from the memory card installed time tm showing the time when the memory card 1 is installed to the processing device 2 as a starting point instead of the authenticated time tv.

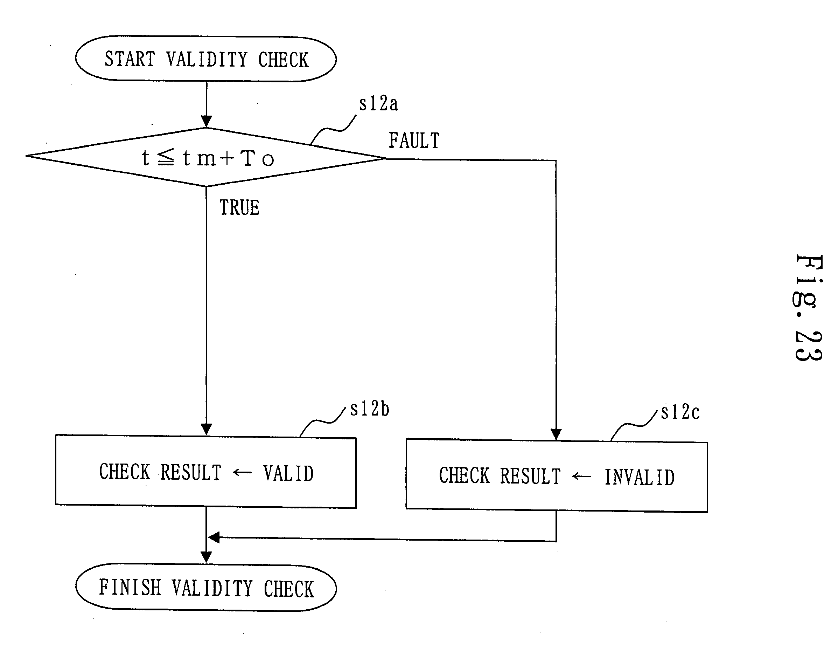

Fig. 23 is a flowchart showing the validity check process of the validity checking unit 14 according to the sixth embodiment.
In the sixth embodiment, when instead of the authenticated time tv, the memory card installed time tm is set to the starting point for calculating the upper limit of the time when access to the data can be permitted without the online authentication process at off-line, the operation of the validity check process carried out by the validity checking unit 14 will be explained based on Fig. 23.

The validity checking unit 14 reads the memory card installed time tm and the off-line access permitted time To from the data storing unit 10, and checks if the current time t is before the time (tm + To) which is To after tm or not (s12a).

As well as the above first embodiment, tm + To shows the upper limit of the time when the access to the data can be permitted without the online authentication process at off-line.

If the current time t is before tm + To, it is judged that the access to the data can be permitted without the online authentication process, and data showing "valid" is set to the check result data and responded to the controlling unit 11 (s12b).

On the other hand, if the current time t is after tm + To, data showing "invalid" is set to the check result data and responded to the controlling unit 11 (s12c).

As well as the above first embodiment, the authentication requesting unit 13 updates the authenticated time tv when the online authentication process is carried out, and it is possible to implement the process of the step s01g instead of the step s12a as well as the above first embodiment.
Selection of process to carry out can be implemented by methods in which the selection is specified by the user at an arbitrary time, in which the selection is previously specified in the memory card 1, and in which the selection is written accompanied to data together with the certificate Cert in the storing unit 10 when the data is written, etc.

In the sixth embodiment, in Fig. 22, the controlling unit 11 starts the validity checking unit 14 to implement the validity check process; however, the validity check process by the validity checking unit 14 can be unimplemented.

As discussed above, by implementing the authentication process and the validity check process on installing the memory card 1 to the processing device 2, it is possible to implement the authentication process and the validity check process instantly at the time of installing and to prevent improper manipulation of the data in the memory card by another processing device or access to the data which is kept undeleted for a long time even when the memory card 1 is removed from the processing device 2 and moved to another processing device 2 such as PC for installation, or when the memory card is removed for a long time.

Further, by measuring the time period in which access to the data is permitted by the off-line access permitted time To without the communication with the authentication device 3 from the memory card installed time tm as the starting point instead of the authenticated time tv, it is assumed that the data is safe by the fact that the data cannot be accessed during the memory card 1 is being removed, and only when the memory card is used by installing to the processing device 2, the time period in which the access to the data is permitted is limited, and consequently, the convenience of the user is further improved while the security is secured.

### Embodiment 7.

In the seventh embodiment, in the validity check process, another case will be explained in which the time period in which access to the data is permitted regardless of off-line by the off-line access permitted time To is started from an access started time ta showing the time when the first access is started since the data is written in the data storing unit 10 instead of the authenticated time tv, and the validity check process is implemented.
Here, parts different from each embodiment will be explained, and the other parts are assumed to be the same as ones in each embodiment.

Hereinafter, the explanation will be done by focusing on the difference with the above first embodiment.
First, when the data is written in the data storing unit 10 of the memory card 1, the access started time ta is set to 0 and written in the data storing unit 10 in addition to the data, Cert, tv, and To. As well as Cert, tv, and To, ta is also written in a form that cannot be read from the processing device 2.

The online operation will be explained.
Similarly to Fig. 7 of the above first embodiment, the authentication requesting unit 13 stores the authentication result data if the value of R included in the authentication result data received from the authentication device 3 shows "succeeded".
Here, the authentication requesting unit 13 sets 0 to the value of ta (s03f).

Next, the off-line operation will be explained.

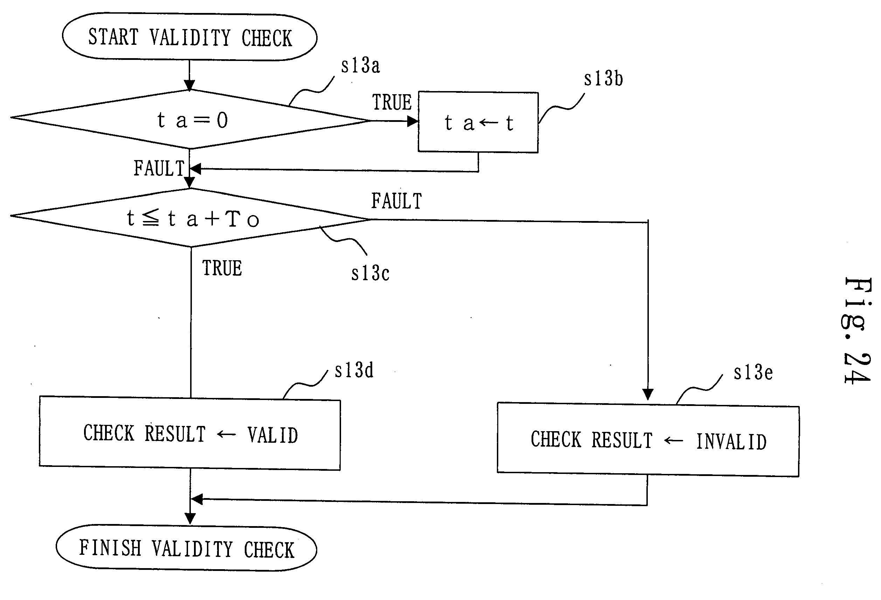

Fig. 24 is a flowchart showing the validity check process of the validity checking unit 14 according to the seventh embodiment.
In the seventh embodiment, when the starting point for calculating the upper limit of the time when access to the data can be permitted at off-line without the online authentication process is set to the access started time ta instead of the authenticated time tv, the validity check process implemented by the validity checking unit 14 will be explained based on Fig. 24.

The validity checking unit 14 reads the access started time ta of the data and checks if ta equals 0 or not (s13a).

If ta equals to 0, the online authentication process has been done last time or the validity check process of this time is the first validity check process since the data is written, so that the validity checking unit 14 sets the value of the current time t to ta (s13b).

The validity checking unit 14 reads the off-line access permitted time To of the data and checks if the current time t is before the time (ta + To) which is To after ta or not (s13c).

As well as the above first embodiment, ta + To shows the upper limit of the time when the access to the data can be permitted without the online authentication process.

If the current time t is before ta + To, it is judged that the access to the data can be permitted without the online authentication process, and data showing "valid" is set to the check result data and responded to the controlling unit 11 (s13d).

On the other hand, if the current time t is after ta + To, data showing "invalid" is set to the check result data and responded to the controlling unit 11 (s13e).

As well as the above first embodiment, the authentication requesting unit 13 updates the authenticated time tv when the online authentication process is done, and it is also possible to implement the process of the step s01g instead of the steps s13a, s13b, and s13c as well as the above first embodiment.
Selection of process to carry out can be implemented by methods in which the selection is specified by the user at an arbitrary time, in which the selection is previously specified in the memory card 1, and in which the selection is written accompanied to data together with the certificate Cert in the storing unit 10 when the data is written, etc.

As discussed above, by measuring the time period in which access to the data is permitted by the off-line access permitted time To without the communication with the authentication device 3 from the access started time ta as the starting point instead of the authenticated time tv, the time period in which access to the data is permitted is limited after the time point when the user actually starts access, and consequently, it is possible to improve the convenience of the user while the security is secured.

Further, by enabling to select the starting time from the authenticated time tv, the memory card installed time tm, and the access started time ta, it is possible to adjust a balance between the security and the convenience by the user, the issuer of the memory card, the manager of the authentication device, the data creator, etc. according to its intention, service form, and contents of the data.

### Embodiment 8.

In the eighth embodiment, another case will be explained in which the authentication process and the validity check process are carried out periodically by a timer.
Here, parts different from each embodiment will be explained, and the other parts are assumed to be the same as ones in each embodiment.

The configuration of the eighth embodiment is the same as Figs. 10, 3, and 4 of the above second embodiment.
Next, the operation will be explained.

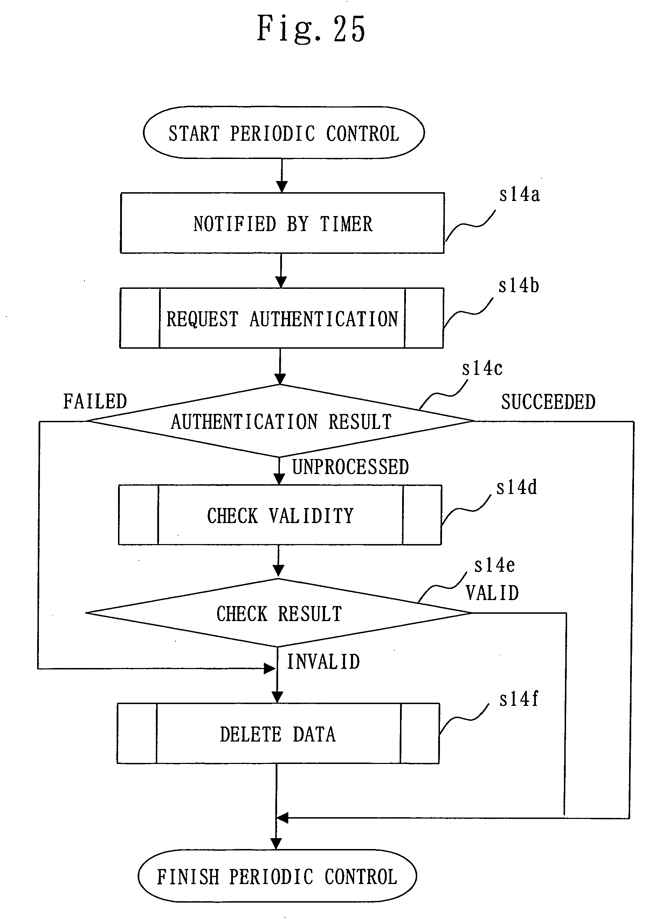

Fig. 25 is a flowchart showing the operation of the memory card 1 accompanied to the authentication requesting process and the validity check process started by a timer unit 16.
The authentication process and the validity check process are started by a notice from a timer implemented by the timer unit 16 (s14a).
Explanation of other processes (s14b through s14f) are the same as one for the processes (s11c through s11g) shown in Fig. 22 of the sixth embodiment.

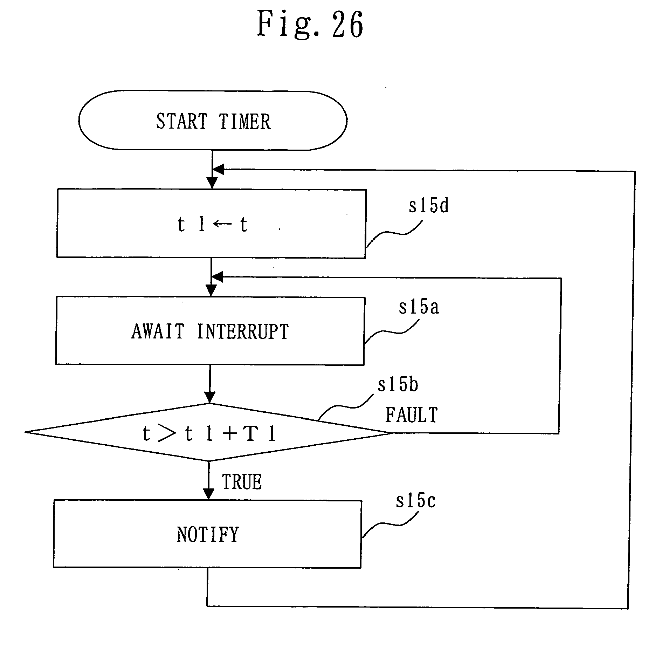

Fig. 26 is a flowchart showing an example of the operation of the timer implemented by the timer unit 16 according to the eighth embodiment.

The timer unit 16 maintains the last periodically checked time tl showing the time when the authentication process and the validity check process of this flow has last started and an interval for periodic check Tl showing an interval for implementing the authentication process and the validity check process of this flow.
The interval for periodic check Tl can be set in various configuration methods.
It can be configured to be previously set by the user, the manufacturer of the memory card, the processing device 2, the authentication device 3, etc., and it can be configured to be dynamically changed.

The timer unit 16 first sets the value of the current time t to the last periodically checked time tl (s15d).
Next, generation of periodic interrupt provided by the hardware of the memory card 1, etc. is awaited (s15a), and at each interrupt, it is checked if the current time t is after the time (tl + Tl) which is Tl after tl or not (s15b).
If t is before tl + Tl, another interrupt is awaited again (s15a).
If t is after tl + Tl, a notice is sent to the timer unit 16 (s15c), and the operation returns to the step s15d.
This notice is periodically done with the interval of time Tl.

In Fig. 25, notified by the timer, the timer unit 16 starts the controlling unit 11 (s14a).
The controlling unit 11 starts the authentication requesting unit 13 for the data maintained in the data storing unit 10 and implements the authentication process (s14b).
The controlling unit 11 checks the authentication result of the authentication requesting unit 13 (s14c) and finishes the process if the authentication result shows "succeeded".
If the authentication result shows "failed", all of the data and its accompanied information stored are deleted from the data storing unit 10 (s14f).

Further, if the authentication result shows "unprocessed", the validity checking unit 14 is started, and the validity check process is carried out (s14d).
The controlling unit 11 checks the check result of the validity checking unit 14 (s14e) and finishes the process if the check result shows "valid".
On the other hand, if the authentication result shows "invalid", all of the data and its accompanied information stored are deleted from the data storing unit 10 by the deleting unit 15 (s14f).

In the eighth embodiment, in Fig. 25, the controlling unit 11 starts the validity checking unit 14 to implement the validity check process; however, the validity check process of the validity checking unit 14 can be unimplemented.

As discussed above, regardless of access to the data, by implementing the authentication process and the validity check process by notification from the timer, when the memory card is lost, etc., even if the data has not accessed yet, it is possible to always invalidate the data, that is, to delete the data at the time point when the set time T1 has passed, and consequently the security against improper access to the data on the memory card can be improved.

### Embodiment 9.

In the ninth embodiment, another case will be explained in which the validity check process is carried out by a value (a clock value, hereinafter) based on a signal generated periodically (a clock, hereinafter) at the time of being interrupted by the hardware.
Here, parts different from each embodiment will be explained, and the other parts are assumed to be the same as ones in each embodiment.

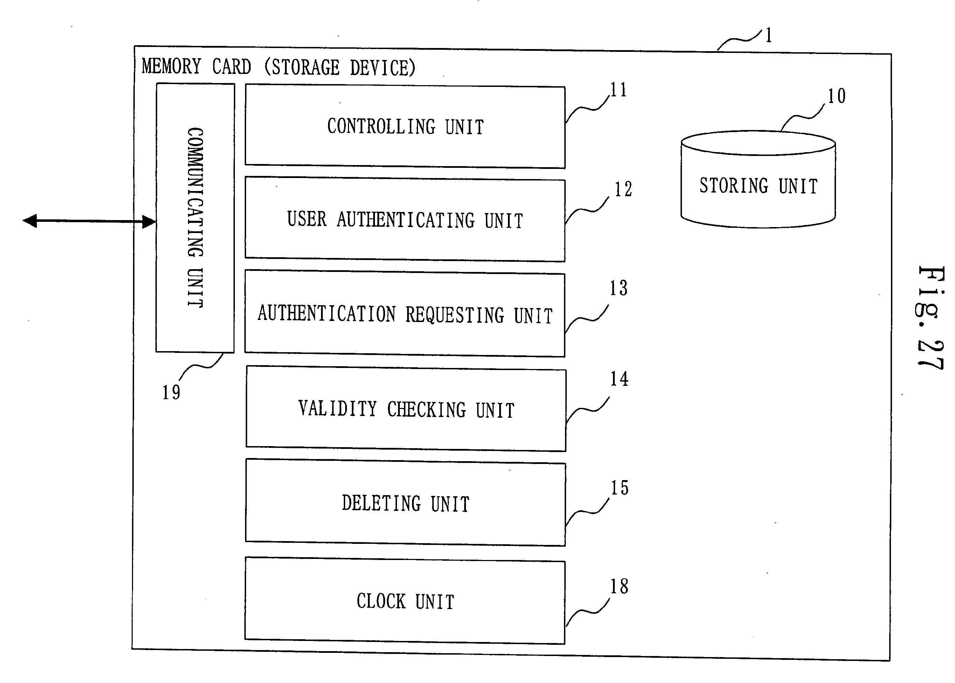

Fig. 27 shows an example of a configuration of the memory card 1 according to the ninth embodiment.
In Fig. 27, in addition to each unit included in the memory card 1 shown in Fig. 2 of the above first embodiment, the memory card 1 includes a clock unit 18 which maintains a clock value also while the memory card 1 is not being supplied with electric power, is started at the same time as the start of supplying electric power to the memory card 1, and increments the above clock value periodically with a regular interval only when the memory card 1 is being supplied with electric power.
Fig. 27 shows the configuration of Fig. 2 to which the clock unit 18 is added; however, the clock unit 18 can be similarly added to the configurations of Figs. 10, 14, and 21.
The configuration other than the memory card 1 are the same as Figs. 3 and 4 of the above first embodiment.

Next, the operation will be explained.
In each embodiment, it is preferable that the current time t can be measured by some time measuring method at steps in which the operation is defined by elapse of time or comparison of time (the steps s03i, s04a, s04d, s06b, s07a, s07d, s08a, s10a, s10b, s10i, s11b, s12a, s13b, s13c, s15b, s15d, etc.).

When the memory card 1 maintains, for example, a clock which is operable without being supplied with electric power by the processing device 2, a clock can be a time measuring method, and the current time t represents an approximately real time, though a certain error may be included.

On the other hand, when the memory card 1 does not maintain the clock which is operable without being supplied with electric power by the processing device 2, it is impossible to measure a real time as above.

In the memory card 1 which does not maintain the clock that measures a real time such as the above, the clock unit 18 of the eighth embodiment secures an exclusive area in the data storing unit 10, maintains a clock value c and an increment C of the clock value in the area, and increments periodically with a regular interval the clock value c by the increment C.

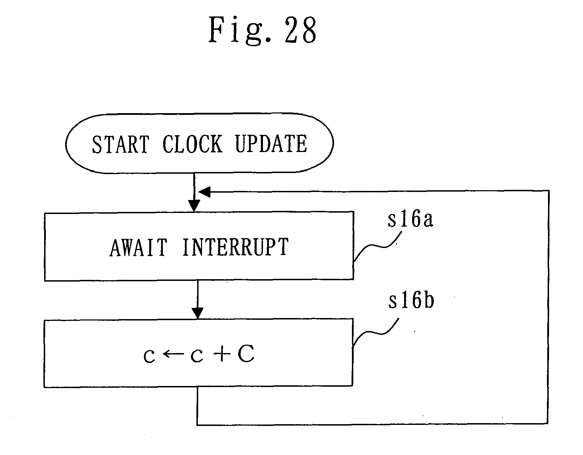

Fig. 28 is a flowchart showing an example of clock updating process carried out by the clock unit 18 according to the ninth embodiment.
The clock unit 18 awaits generation of periodic interrupt with a regular interval provided by the hardware of the memory card 1, etc. (s16a), and at every interrupt, the clock unit 18 adds the increment C of clock value to the clock value c (s16b) and awaits generation of another interrupt again (s16a).

At this time, the increment C of clock value can be a value represented by real time showing the interval of the generated interrupts or can be set simply to 1.

At the above steps in which the operation is defined by elapse of the time or comparison of time, the current time t is calculated using the clock value c.
For example, it can be a value obtained by multiplying a unit of the clock value c, namely, the real time corresponding to the clock value 1 to the clock value c.

Further, similarly to the above, at the process (s03f) of changing the value of the current time t to the authenticated time tvn received from the authentication device 3, it is necessary to convert the received authenticated time tvn to match the clock value c and the increment C of clock value. This conversion can be implemented by, for example, dividing the received authenticated time tvn by the above unit of the clock value c.

In this way, using the current time t obtained from the clock value c, it is possible to express the time period while the memory card 1 is supplied with electric power by the processing device 2 since the current time t has been last updated to the received authenticated time tvn regardless of online or off-line.

Here, the clock value obtained from the clock can be expressed by time as discussed above and can be also expressed by the number of times of generation of the interrupts. When it is expressed by the number of times of generation of the interrupts, the off-line access permitted time To received from the authentication device 3 can be expressed by the number of times.

As discussed above, when the memory card 1 does not maintain a clock which is operable without power supply from the processing device 2, using the clock unit 18 which operates only while the memory card is supplied with electric power by the processing device 2, it is possible to measure the time period during the memory card 1 is supplied with electric power by the processing device since the current time t has been last updated to the received authenticated time tvn, which enables to provide the time and the time period that have a basis to some extent supported by the hardware implementation to the memory card 1.

Further, it is possible to prevent improper access to the data with a false time by using the clock of the processing device 2 that might become an unreliable value by manipulation of the user.

Further, it is also possible to prevent a state in which the time cannot be established unless online and data access is impossible at off-line by trusting only the time sent by the server that can provide the time such as the authentication device on the network.

Because of this, the security is ensured and the convenience of the user can be improved at the same time.

### Embodiment 10.

In the tenth embodiment, another case will be explained in which the validity check process is carried out based on obtained time when time is obtained from the outside, and if the obtained time shows time later than the time which has been previously obtained.
Here, parts different from each embodiment will be explained, and the other parts are assumed to be the same as ones in each embodiment.

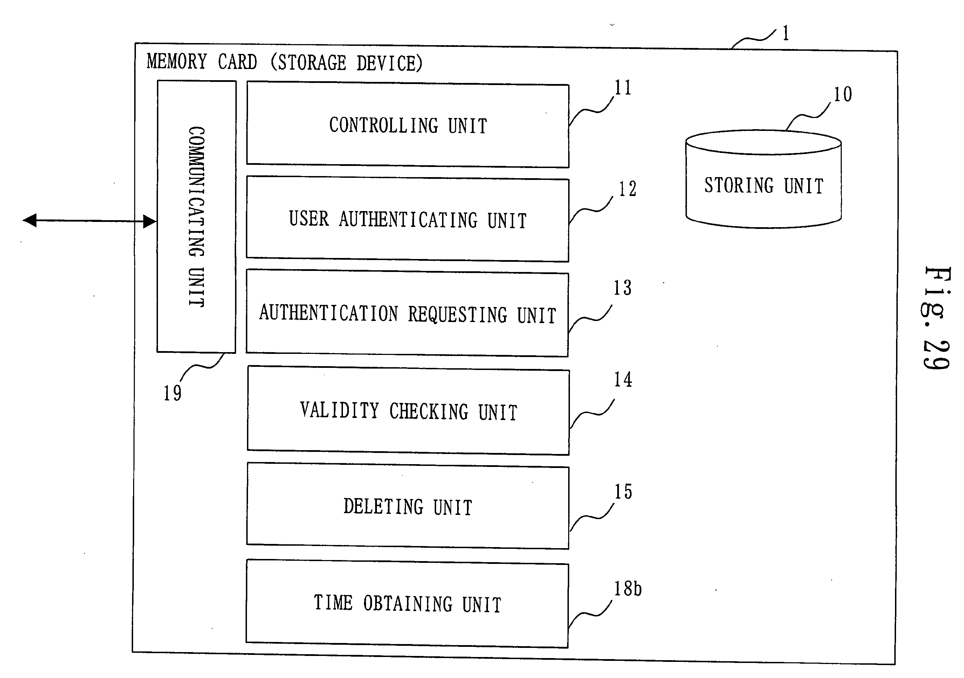

Fig. 29 shows an example of the configuration of the memory card 1 according to the tenth embodiment.
In Fig. 29, the memory card 1 includes, in addition to each unit included in the memory card 1 shown in Fig. 2 of the above first embodiment, a time obtaining unit 18b which obtains a time from the processing device 2, stores the obtained time, and takes the obtained time as the current time only if the obtained time is after the time which has been obtained last time.

Fig. 29 shows a configuration in which the time obtaining unit 18b is added to the configuration of Fig. 2; however, in the same way, it is also possible to add the time obtaining unit 18b to the configuration of Figs. 10, 14, and 21.
The configuration except the memory card 1 is the same as ones shown in Figs. 3 and 4 of the above first embodiment.

Next, the operation will be explained.
In the tenth embodiment, at the steps which refer to the current time t (the steps s03i, s04a, s04d, s06b, s07a, s07d, s08a, s10a, s10b, s10i, s11b, s12a, s13b, s13c, s15b, and s15d), the current time t is obtained by the time obtaining unit 18b.
Consequently, it is not necessary for the memory card 1 to maintain the clock which is operable without power supply from the processing device 2.

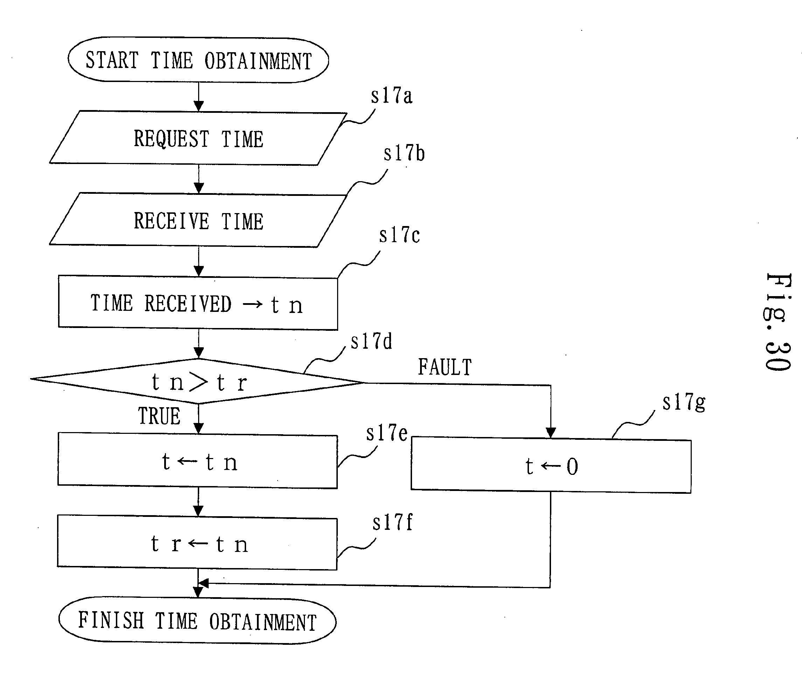

Fig. 30 is a flowchart showing a time obtainment process carried out by the time obtaining unit 18b according to the tenth embodiment.
The time obtaining unit 18b secures an exclusive area in the data storing unit 10 and maintains a time record tr in the area.

When the time obtainment process is started, the time obtaining unit 18b first requests the processing device 2 to obtain a time via the communicating unit 19 (s17a).
In response to the request received via the communicating unit 29, the processing device 2 sends the time obtained by some time measuring means such as a clock included in the processing device 2 to the memory card 1 via the communicating unit 29. The time obtaining unit 18b receives the above time via the communicating unit 19 (s17b).
Then, the received time is set to a received time tn (s17c).

Subsequently, the time obtaining unit 18b reads the time record tr from the data storing unit 10 and compares tn and tr (s17d).
If tn is larger than tr, it is judged that the received time tn is reliable, tn is set to the current time t (s17e), the value of tr is changed to tn for the next process (s17f), and the process is finished.

If tn is equal to or smaller than tr, namely, the received time tn is backward to the time tr which has been obtained last time, it is judged that the time measuring means which is a basis for the received time tn has been probably manipulated.
The time obtaining unit 18b judges tn is not reliable, the value of the current time t is set to 0 (s17g), and the process is finished.

The procedure for carrying out the time obtainment process on implementing each step which refers to the current time t has been discussed above.
Next, a case of another configuration in which the time obtainment process is periodically done using a timer unit 16 will be explained.

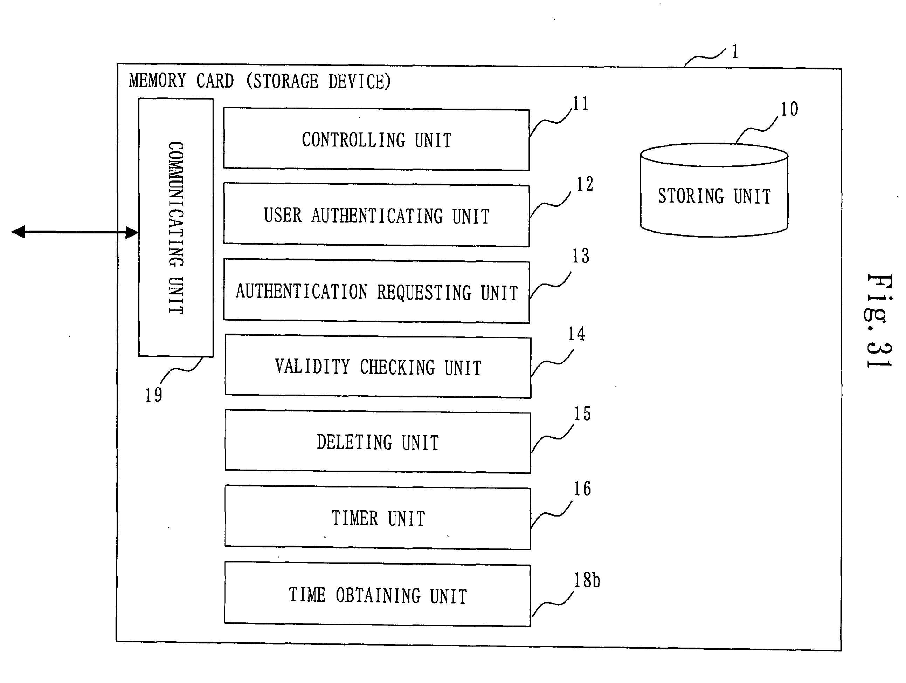

Fig. 31 shows an example of a configuration of the memory card 1 according to the tenth embodiment.
In case of periodically implementing the time obtainment process, the memory card 1 includes, in addition to each unit described above, a timer unit 16 which periodically starts the time obtainment process.
Fig. 31 shows the configuration in which the time obtaining unit 18b and the timer unit 16 are added to the configuration of Fig. 2; however, similarly to Fig. 29, it is also possible to include the time obtaining unit 18b and the timer unit 16 in the configurations of Figs. 10, 14, and 21.

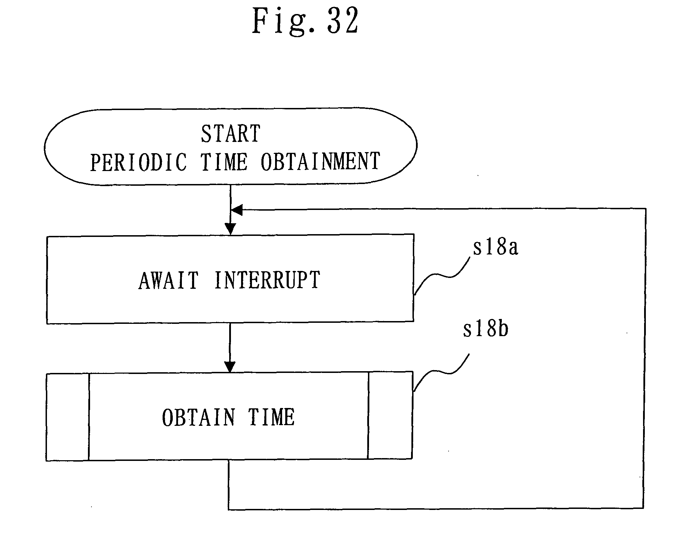

Fig. 32 is a flowchart showing an example of the operation of a timer carried out by the timer unit 16 according to the tenth embodiment.
The timer unit 16 awaits generation of periodic interrupt with a regular interval provided by the hardware of the memory card 1, etc. (s18a), at every interrupt, starts the time obtaining unit 18b to implement the time obtainment process (s18b), and awaits generation of another interrupt again (s18a).

As discussed above, only when the memory card 1 obtains the time from the processing device 2 and records, and if the obtained time tn is confirmed to be after the time tr which has been recorded last time, the obtained time tn is used as the current time t.

Because of this, it is possible to guarantee that the obtained time tn, that is, the current time t is not set back before the time tr which has been recorded last time.

Further, even if the clock which is operable without power supply from the processing device 2 is not included, it is possible to prevent generation of improper access to the data with a false time.

Further, it is also possible to prevent a state in which the time cannot be established unless online and data access is impossible at off-line by trusting only the time of the server that can provide the time such as the authentication device 3 on the network.

Because of this, the security is ensured and the convenience of the user can be improved at the same time.

Further, by periodically obtaining the time from the processing device 2, without depending on timing of implementing the process that requires the current time t, it is possible to guarantee the obtained time tn, namely, the current time t is not set back before at least the interval of the periodic time obtainment, which further improves the security.

Here, for example, in the above first embodiment, the validity is checked by comparing the time from the authenticated time tv to the time when the validity check is started, namely, to the current time t and the off-line access permitted time received from the authentication device 3; however, it is also possible to check the validity by receiving a limited time for permitting off-line access from the authentication device 3 and by comparing the received limited time and the obtained current time t.
At this time, if the current time t exceeds the limited time, it is judged "invalid", and if the current time t does not exceed, it is judged "valid".
The current time t does not always need to be the time obtained from the processing device 2 as in the tenth embodiment.

In each embodiment, the authentication process and the validity check can be carried out at the following timing:
at the timing of starting use of the data such as opening the file; updating the data; switching tasks that use the data etc.;
at the timing with a regular interval during the data is being used such as the task using the data is active while the file is open;
at the timing with a regular interval during the data is not used;
at the timing of connecting the memory card 1 to the outside device such as installing the memory card 1 to the processing device 2, connecting the memory card 1 to the authentication device 3 via network, etc.; and
at the timing of disconnecting the memory card 1 from the outside device.

Further, in each embodiment, the following validity check process can be carried out:
the validity check process by comparing a time period from any one of the time when the use of data is started, the authenticated time, the time when the validity check process is done, the time when the memory card 1 is connected to the outside device, and the time when the memory card 1 is disconnected from the outside device until the time the validity check process is started and the valid duration of use data showing the valid duration of use of the data such as the off-line access permitted time received from the authentication device 3 and stored in the data storing unit 10;

the validity check process by comparing the time when the validity check process is started and the valid duration of use data such as the off-line access permitted time received from the authentication device 3 and stored in the data storing unit 10; and

the validity check process by comparing the clock value and the valid duration of use data in a period from any one of the time when the use of data is started, the authenticated time, the time when the validity check process is done, the time when the memory card 1 is connected to the outside device, and the time when the memory card 1 is disconnected from the outside device until the time the validity check process is started.
The above can be done by calculating the time from the clock value and comparing with the time shown by the valid duration of use data, and it also can be done by comparing the number of interrupts shown by the clock value and the value indicated by the valid duration of use data.

Further, it is also possible to carry out the authentication process and the validity check process at plural timings, and the above plural validity check processes can be done. Further, the timings and the validity check processes can be combined in any way.

The memory card has been explained in each embodiment, in which the memory card 1, installed to the processing device 2 having an inputting/outputting means for exchanging the data and the control signal with the memory card 1, includes an access controlling means which detects and controls access to plural data areas and the data stored in the data areas; a user authenticating means which authenticates a user who accesses the data; a validity verifying means which verifies the validity of the memory card, the data area, or the data; and the inputting/outputting means which exchanges the data and the control signal with the terminal device, the user authenticating means is started when the access controlling means detects a request for access to the data, the user authenticating means implements the authentication of the user who accesses the data, when the authentication succeeds, the validity verifying means is started, the validity verifying means sends via the inputting/outputting means information necessary for verifying if the memory card 1, the data area, or the data is valid or not, receives the verification result showing that the memory card, the data area, or the data is valid or not, the result of the validity verification is notified to the access controlling means, and the access controlling means permits the request for access to the data only if the result of the validity verification is valid, and in the memory card, when the result of the validity verification is valid, the validity verifying means receives the time when the verification is carried out and the off-line access permitted time via the inputting/outputting means and maintains them, the validity verifying means judges that the memory card 1, the data area, or the data is valid without implementing the communication via the inputting/outputting means during the off-line access permitted time from the time when the verification is done in the validity verification.

Further, it has been explained that the processing device 2 also has a validity verifying means which verifies if the memory card 1, the data area, or the data is valid or not, the verification if the memory card 1, the data area, or the data is valid or not is carried out by the validity verifying means of the terminal device, and the validity verifying means of the processing device 2 generates the time when the verification is done and the off-line access permitted time.

Further, it has been explained that the processing device 2 also has a communicating means which communicates via the network, the verification checks if the memory card 1, the data area, or the data is valid or not is carried out by the authentication device 3 which can communicate with the terminal device via the network, and the authentication device 3 generates the time when the verification is done and the off-line access permitted time.

Further, it has been explained that when the validity verifying means tries the validity verification accompanied by the communication via the inputting/outputting means, the result of the validity verification of the memory card 1, the data area, or the data is made pending if the communication is unavailable, and the access controlling means which is notified by the validity verifying means of the result does not permit the access request to the data.

Further, it has been explained that the memory card 1 also has a deleting means which deletes data stored in the memory card 1, when the result of the validity verification of the memory card 1, the data area, or the data is judged as invalid, the deleting means is started, and the deleting means deletes the data stored in the memory card 1, the data area, or the data.

Further, it has been explained that the memory card 1 also has a timer means which detects at least one time or elapse of time specified corresponding to the data and notifies the validity verifying means, the validity verifying means maintains previously the data maintainable time and specifies to the timer means by corresponding the data maintainable time with the data, the timer means, when the data maintainable time has passed, notifies the validity verifying means of the fact and the related data, and the validity verifying means starts the deleting means to delete the data because of the fact.

Further, it has been explained that the memory card 1 also has a timer means detecting at least one time or elapse of time specified corresponding to the data and notifies the access controlling means, the validity verifying means specifies to the timer means by corresponding the off-line access permitted time with the data, the timer means, when the off-line access permitted time has passed, notifies the access controlling means of the fact and the related data, and the access controlling means starts the user authenticating means when there is an access to the data.

Further, it has been explained that the validity verifying means receives and maintains the number of times for extending the off-line access permitted time in case of the validity verification accompanied by the communication via the inputting/outputting means, the validity verifying means, when the validity verifying means tries but fails to implement the validity verification accompanied by the communication via the inputting/outputting means, only if the number of times for extending the off-line access permitted time is at least 0, decrements the number of times extending the off-line access permitted time by 1, does not carry out the communication, and judges that the memory card, the data area, or the data is valid.

Further, it has been explained that the memory card 1 also has an alternative verifying means which verifies the validity of the memory card 1, the data area, or the data without the communication, the validity verifying means, in case of the validity verification accompanied by the communication via the inputting/outputting means, receives and maintains the number of times for using alternative checking means, the validity verifying means, when the validity verifying means tries but fails to implement the validity verification accompanied by the communication via the inputting/outputting means, only if the number of times for using alternative checking means is at least 0, decrements the number of times for using alternative checking means by 1, starts the alternative checking means, the alternative checking means checks the validity of the memory card, the data area, or the data without implementing the communication, notifies the validity verifying means of success or failure of the verification, the validity verifying means judges that the memory card 1, the data area, or the data is valid if the success is notified by the alternative checking means, and judges invalid if the failure is notified.

Further, it has been explained that the memory card 1 also has an installation detecting means which detects installation of the memory card 1 to the equipment which accesses the memory card 1, the installation detecting means starts the validity verifying means when the installation of the memory card 1 to the equipment which accesses the memory card 1.

Further, it has been explained that the validity verifying means, if the validity verifying means tries but fails to implement the validity verification accompanied by the communication via the inputting/outputting means, maintains the time at the point when the validity verification has failed, and the validity verifying means judges that the memory card 1, the data area, or the data is valid without the communication in the validity verification during the time period of the off-line access permitted time from the time at the point of the failed validity verification.

Further, it has been explained that the validity verifying means, when started by an installation detecting means, maintains the time at the point of the validity verification started by the installation detecting means, and the validity verifying means judges that the memory card 1, the data area, or the data is valid without the communication in the validity verification during the time period of the off-line access permitted time from the time at the point of the validity verification started by the installation detecting means.

Further, it has been explained that the validity verifying means maintains the time at the point when the first validity verification of the data is about to be done, and the validity verifying means judges that the memory card 1, the data area, or the data is valid without the communication in the validity verification during the time period of the off-line access permitted time from the time at the point of the first validity verification.

Further, it has been explained that the validity verifying means previously receives from the terminal device via the inputting/outputting means and maintains from which point of the time the validity verifying means judges that the memory card 1, the data area, or the data is valid without the communication during the time period of the off-line access permitted time in the validity verification.

Further, it has been explained that the memory card 1 has a timer means which periodically detects repeatedly elapse of the interval of validity verification maintained in advance and notifies the validity verification means, the timer means, when the interval of validity verification has passed, notifies the validity verifying means of the fact, and the validity verifying means starts the validity verification.

Further, it has been explained that the memory card 1 also maintains a clock value which is maintainable without power supply to the memory card 1 and a clock means which is started simultaneously to the start of supplying electric power to the memory card 1 and increments the clock value periodically with a regular interval only while the memory card 1 is supplied with electric power, and the validity verifying means and the timer means use the clock value as a time.

Further, it has been explained that the memory card 1 also includes a time obtaining means which obtains a time from the processing device 2, stores the obtained time, and notifies of the obtained time as the current time only when the obtained time is after the time which has been obtained last time, and the validity verifying means and the timer means obtain the time from the time obtaining means.

Further, it has been explained that the time obtaining means periodically obtains the time with a regular interval from the terminal device and stores.

### Brief Explanation of the Drawings

[Fig. 1] Fig. 1 shows a hardware configuration of a storage device 1 according to the first embodiment.
[Fig. 2] Fig. shows a configuration of a memory card 1 according to the first embodiment.
[Fig. 3] Fig. 3 shows a general configuration when a processing device 2 carries out authentication process according to the first embodiment.
[Fig. 4] Fig. 4 shows a general configuration when the processing device 2 carries out authentication process by communicating with an authentication device 3 according to the first embodiment.
[Fig. 5] Fig. 5 is a flowchart showing a access controlling process by a controlling unit 11 according to the first embodiment.
[Fig. 6] Fig. 6 is a flowchart showing an example of the operation of user authentication carried out by a user authenticating unit 12 according to the first embodiment.
[Fig. 7] Fig. 7 is a flowchart showing an authentication requesting process of an authentication requesting unit 13 according to the first embodiment.
[Fig. 8] Fig. 8 is a flowchart showing a validity check process of a validity checking unit 14 according to the first embodiment.
[Fig. 9] Fig. 9 is a flowchart showing a validity check process of the validity checking unit 14 according to the second embodiment.
[Fig. 10] Fig. 10 shows a configuration of the memory card 1 according to the third embodiment.
[Fig. 11] Fig. 11 is a flowchart showing an access controlling process of the controlling unit 11 according to the third embodiment.
[Fig. 12] Fig. 12 is a flowchart showing the operation of a timer carried out by a timer unit 16 according to the third embodiment.
[Fig. 13] Fig. 13 is a flowchart showing the operation of a validity check process carried out by the validity checking unit 14 according to the third embodiment.
[Fig. 14] Fig. 14 shows a configuration of the memory card 1 according to the fourth embodiment.
[Fig. 15] Fig. 15 is a flowchart showing the operation of an access controlling process carried out by the controlling unit 11 according to the fourth embodiment.
[Fig. 16] Fig. 16 is a flowchart showing the operation of a validity check process carried out by the validity checking unit 14 according to the fourth embodiment.
[Fig. 17] Fig. 17 is a flowchart showing an example of the operation of the second authentication process carried out by a second user authenticating unit 12b according to the fourth embodiment.
[Fig. 18]Fig. 18 is a flowchart showing an access controlling process by the controlling unit 11 according to the fifth embodiment.
[Fig. 19] Fig. 19 is a flowchart showing an authentication requesting process by a authentication requesting unit 13 according to the fifth embodiment.

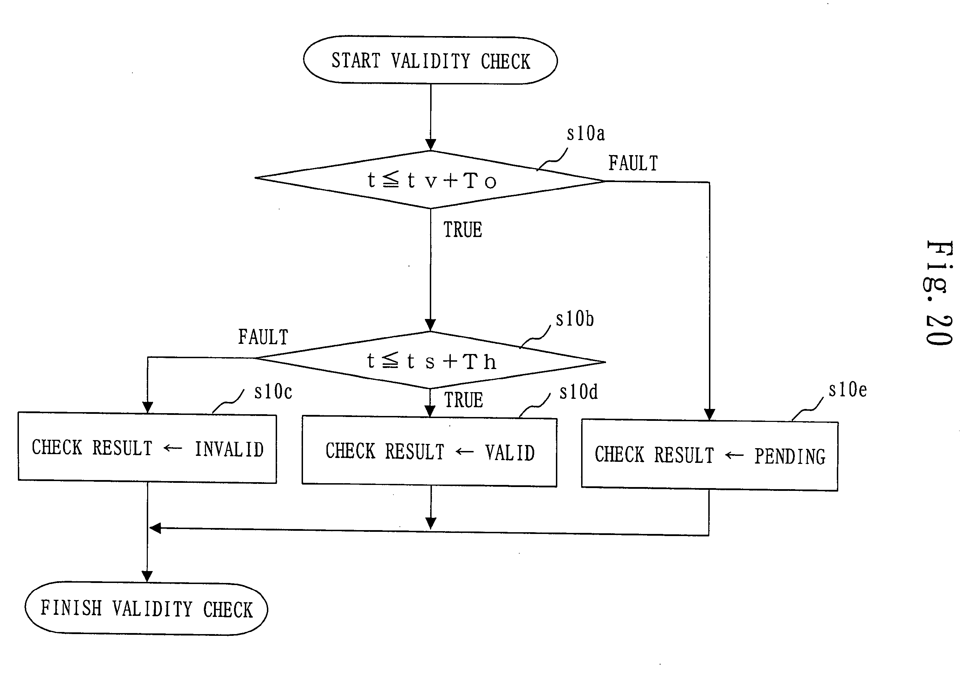

[Fig. 20] Fig. 20 is a flowchart showing a validity check process carried out by the validity checking unit 14 according to the fifth embodiment.
[Fig. 21]Fig. 21 shows a configuration of the memory card 1 according to the sixth embodiment.
[Fig. 22] Fig. 22 is a flowchart showing a controlling on installation process according to the sixth embodiment.
[Fig. 23] Fig. 23 is a flowchart showing a validity check process by the validity checking unit 14 according to the sixth embodiment.
[Fig. 24] Fig. 24 is a flowchart showing a validity check process by the validity checking unit 14 according to the seventh embodiment.
[Fig. 25] Fig. 25 is a flowchart showing the operation of the memory card 1 accompanied to an authentication requesting process and a validity check process started by a timer unit 16 according to the eighth embodiment.
[Fig. 26] Fig. 26 is a flowchart showing an example of the operation of a timer implemented by the timer unit 16 according to the eighth embodiment.
[Fig. 27] Fig. 27 shows a configuration of the memory card 1 according to the ninth embodiment.
[Fig. 28] Fig. 28 is a flowchart showing an example of a clock update process carried out by a clock unit 18 according to the ninth embodiment.
[Fig. 29] Fig. 29 shows a configuration of the memory card 1 according to the tenth embodiment.
[Fig. 30] Fig. 30 is a flowchart showing a time obtainment process carried out by a time obtaining unit 18b according to the tenth embodiment.
[Fig. 31] Fig. 31 shows a configuration of the memory card 1 according to the tenth embodiment.
[Fig. 32] Fig. 32 is a flowchart showing an example of the operation of the timer carried out by the timer unit 16 according to the tenth embodiment.

## Claims

1. A storage device comprising:
a data storing unit storing security target data and valid duration of use data showing a valid duration of use of the security target data; and
a validity checking unit implementing validity check process for checking if the security target data stored in the data storing unit is valid.

2. The storage device of claim 1,
wherein the storage device is connected to
a processing device carrying out a process using the security target data stored in the data storing unit and
an authentication device authenticating use of the security target data stored in the data storing unit,
wherein the storage device further comprises:
a communicating unit communicating with the processing device and the authentication device;
an authentication requesting unit implementing a request for authentication of use of the security target data stored in the data storing unit; and
a controlling unit controlling the communicating unit, the authentication requesting unit, the validity checking unit, and the data storing unit,
wherein the communicating unit receives use requesting data for requesting use of the security target data stored in the data storing unit from the processing device and outputs the use requesting data to the controlling unit;
wherein the controlling unit outputs the use requesting data outputted from the communicating unit to the authentication requesting unit;
wherein the authentication requesting unit, in response to the use requesting data outputted from the controlling unit, outputs the authentication requesting data for requesting authentication of use of the security target data stored in the data storing unit to the communicating unit;
wherein the communicating unit, when it is possible to communicate with the authentication device, receives authentication result from the authentication device and outputs the authentication result received to the authentication requesting unit, and the authentication requesting unit outputs the authentication result outputted from the communicating unit to the controlling unit;
wherein the communicating unit, when it is impossible to communicate with the authentication device, outputs data showing that communication with the authentication device is unavailable to the authentication requesting unit, and the authentication requesting unit outputs the data outputted from the communicating unit to the controlling unit;
wherein the controlling unit,
when an output from the authentication requesting unit is the authentication result of the authentication device, checks request result of the use requesting data based on the authentication result, and outputs request result data checked to the communicating unit,
when an output from the authentication requesting unit is data showing that communication with the authentication device is unavailable, outputs the use requesting data to the validity checking unit, checks the request result for the use requesting data based on check result of the use requesting data outputted by the validity checking unit, and outputs the request result data checked to the communicating unit; and
wherein the communicating unit sends the request result data outputted by the controlling unit to the processing device.

3. The storage device of claim 1,
wherein the validity checking unit implements the validity check process of the security target data stored in the data storing unit at at least one of:
timing of starting use of the security target data stored in the data storing unit;
periodic timing with a regular interval when the security target data stored in the data storing unit is used; and
periodic timing with a regular interval when the security target data stored in the data storing unit is unused.

4. The storage device of claim 1,
wherein the data storing unit stores:
starting time data showing a starting time of use of the security target data; and
checked time data showing a time when the validity check process of the security target data is implemented, and
wherein the validity checking unit implements the validity check process of the security target data stored in the data storing unit by comparing a time period from at least one of:
a starting time of use of the security target data shown by the starting time data stored in the data storing unit; and
a time when the validity check process of the security target data is implemented shown by the checked time data stored in the data storing unit
until a time to start the validity check process and
the time period shown by the valid duration of use data stored in the data storing unit.

5. The storage device of claim 1,
wherein the validity checking unit implements the validity check process of the security target data stored in the data storing unit by comparing
a time to start the validity check process and
a time shown by the valid duration of use data stored in the data storing unit.

6. The storage device of claim 1,
wherein the storage device operates by inputting/outputting of a periodic signal having a specific interval;
wherein the data storing unit stores a number of times of inputting/outputting the signal at least during one of
a time period from a starting time of use of the security target data until a time to start the validity check and
a time period from a time when the validity check process of the security target data is implemented until the time to start the validity check, and
wherein the validity checking unit implements the validity check process of the security target data stored in the data storing unit based on
the number of times of inputting/outputting the signal stored in the data storing unit and
the valid duration of use data stored in the data storing unit.

7. The storage device of claim 4,
wherein the storage device is connected to an outside device storing time data,
wherein the storage device further comprises a communicating unit communicating with the outside device and obtaining the time data stored by the outside device,
wherein the validity checking unit
before starting the validity check process, obtains the time data stored by the outside device via the communicating unit, compares the time data obtained and the time data stored in the data storing unit,
when the time obtained shows a time which is forward to the time data stored in the data storing unit, implements the validity check of the security target data stored in the data storing unit based on the valid duration of use data stored in the data storing unit, and
when the time obtained shows a time which is not forward to the time data stored in the data storing unit, judges that the security target data stored in the data storing unit invalid.

8. The storage device of claim 5,
wherein the storage device is connected to an outside device storing time data,
wherein the storage device further comprises a communicating unit communicating with the outside device and obtaining the time data stored by the outside device, and
wherein the validity checking unit
before starting the validity check process, obtains the time data stored by the outside device via the communicating unit, compares the time data obtained and the time data stored in the data storing unit,
when the time data obtained shows a time which is forward to the time data stored in the data storing unit, implements validity check of the security target data stored in the data storing unit based on the valid duration of use data stored in the data storing unit, and
when the time data obtained shows a time which is not forward to the time data stored in the data storing unit, judges that the security target data stored in the data storing unit invalid.

9. The storage device of claim 1, wherein the validity checking unit deletes the security target data from the data storing unit when it is judged that the security target data stored in the data storing unit is invalid.

10. The storage device of claim 1,
wherein the storage device is connected to a processing device to which use requesting data is inputted by a user who requests use of the security target data stored in the data storing unit and which processes the use requesting data inputted,
wherein the storage device further comprises:
a communicating unit communicating with the processing device;
a user authenticating unit authenticating the user who requests use of the security target data stored in the data storing unit; and
a controlling unit controlling the communicating unit, the user authenticating unit, the validity checking unit, and the data storing unit,
wherein the communicating unit receives the use requesting data from the processing device and outputs the use requesting data received,
wherein the controlling unit implements the user authenticating unit and the validity checking unit in response to the use requesting data outputted by the communicating unit, judges request result of the use requesting data based on authentication result of the user authenticating unit and check result of the validity checking unit, and outputs request result data to the communicating unit, and
wherein the communicating unit sends the request result data outputted by the controlling unit to the processing device.

11. The storage device of claim 10,
wherein the user authenticating unit implements the authentication of the user based on at least one of a personal identification number, a fingerprint, an eye print, a retina, an iris, a face shape, a voice, a tongue print, a handwriting, an IC (Integrated Circuit) card, a password, and a barcode.

12. The storage device of claim 1,
wherein the storage device is connected to a processing device for implementing a process related to the security target data stored in the data storing unit, and
wherein the validity checking unit implements the validity check process of the security target data stored in the data storing unit at at least one of:
a timing when connected to the processing device;
a timing when disconnected from the processing device;
a timing when use of the security target data stored in the data storing unit is started;
a periodic timing having a regular interval during the security target data stored in the data storing unit is being used; and
a periodic timing having a regular interval during the security target data stored in the data storing unit is unused.

13. The storage device of claim 1,
wherein the storage device is connected to a processing device for implementing a process related to the security target data stored in the data storing unit,
wherein the data storing unit stores:
connected time data showing a time when connected to the processing device;
disconnected time data showing a time when disconnected from the processing device;
a processed time showing a time when the process related to the security target data is implemented by the processing device;
starting time data showing a starting time of use of the security target data; and
checked time data showing a time when the validity check process of the security target data is implemented,
wherein the validity checking unit implements the validity check process of the security target data stored in the data storing unit by comparing a time period from at least one of:
a time when connected to the processing device shown by the connected time data stored in the data storing unit;
a time when disconnected from the processing device shown by the disconnected time data stored in the data storing unit;
a time when the process related to the security target data is implemented by the processing device shown by processed time data stored in the data storing unit;
a starting time of use of the security target data shown by the starting time data stored in the data storing unit; and
a time when the validity check process of the security target data is implemented shown by the checked time data stored in the data storing unit
until a time to start the validity check process and
the time period shown by the valid duration of use data stored in the data storing unit.

14. The storage device of claim 1,
wherein the storage device operates by inputting/outputting of a periodic signal having a specific interval,
wherein the storage device is connected to a processing device for implementing a process related to the security target data stored in the data storing unit,
wherein the data storing unit stores a number of times of inputting/outputting a signal during at least one of:
a time period from a time when connected to the processing device until a time to start the validity check process;
a time period from a starting time of use of the security target data until the time to start the validity check process; and
a time period from a time when the validity check process of the security target data has been previously done until the time to start the validity check process, and
wherein the validity checking unit implements the validity check process of the security target data stored in the data storing unit based on:
the number of times of inputting/outputting the signal stored in the data storing unit; and
the valid duration of use data stored in the data storing unit.

15. A storage method of a storage device storing data comprising:
storing security target data and valid duration of use data showing a valid duration of use of the security target data in a data storing unit; and
implementing a validity check process for checking if the security target data stored in the data storing unit is valid.
